(19) **Europäisches Patentamt / European Patent Office / Office européen des brevets**

(11) **EP 2 028 776 A1**

(12) **EUROPEAN PATENT APPLICATION**
published in accordance with Art. 153(4) EPC

(43) Date of publication:
**25.02.2009 Bulletin 2009/09**

(51) Int Cl.:
**H04J 1/00** *(2006.01)* **H04B 1/707** *(2006.01)*

(21) Application number: **06757093.7**

(22) Date of filing: **07.06.2006**

(86) International application number:
**PCT/JP2006/311386**

(87) International publication number:
**WO 2007/141848 (13.12.2007 Gazette 2007/50)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventors:
• **KIMURA, Dai**
**Kawasaki-shi, Kanagawa 211-8588 (JP)**
• **SHIMOMURA, Tsuyoshi**
**Kawasaki-shi, Kanagawa 211-8588 (JP)**

(74) Representative: **Stebbing, Timothy Charles**
**Haseltine Lake**
**5th Floor Lincoln House**
**300 High Holborn**
**London, WC1V 7JH (GB)**

(54) **BASE STATION AND METHOD FOR ALLOCATING FREQUENCY TO PILOT SEQUENCE**

(57)     A base station that assigns frequencies to UP link pilot signals in a radio communication system, where the base station stores the correlation between each of a plurality of pilot sequences having different Peak to Average Power characteristics and a plurality of frequencies that are used for transmitting the pilot sequence by frequency multiplexing, and makes the correlation between each of said pilot sequences and said assigned frequencies in adjacent cells or sectors different. Moreover, the base station measures the reception quality of signals received from a user terminal, makes reference to the stored correlation and finds a pilot sequence having Peak to Average Power characteristic that correspond to said reception quality, then sends an instruction to the user terminal so that the user terminal transmits the pilot sequence using the frequencies assigned to this pilot sequence.

*FIG. 6*

**Description**

TECHNICAL FIELD

The present invention relates to a base station and method of assigning frequencies to pilot sequences, and more particularly to a base station and method of assigning frequencies that are used for transmitting each of the pilot sequences having different Peak to Average Power ratio characteristics using frequency-division multiplexing transmission such that the correlation between each of the pilot sequences and the assigned frequency band differs between adjacent cells or adjacent sectors.

BACKGROUND ART

• PAPR

In a radio communication system such as a cellular system, the timing synchronization and propagation path estimation (channel estimation) are typically performed using well-known pilot signals on the receiving side, and data demodulation is performed based on these. Moreover, in an adaptive modulation system that improves throughput by adaptively changing modulation method, encoding rate or the like according to the channel qual i ty, the pilot signals are also used for estimating the channel quality, for example, for estimating the Signal to Interference Ratio (SIR) in order to decide the optimum modulation method or optimum encoding rate.
In a cellular system, how to reduce power consumption by a user terminal is an important issue, and improving power efficiency of the terminal amplifier is effective in solving this problem. Taking into consideration the power efficiency of the amplifier from the aspect of the transmission signal, it is necessary that the Peak to Average Power Ratio (PAPR) of the transmission signal is decreased. The reason why the PAPR must be decreased will be explained below.
The larger the output power of an amplifier that is used in a transmitter is, the better the Power Added Efficiency becomes. Therefore, it is preferred that the operating point is brought as close as possible to the maximum value for the output power. However, when the output power exceeds a fixed threshold value, non-linear distortion occurs which is unacceptable as a transmission signal, so a tradeoff exists between the distortion and Power Added Efficiency. The smaller the PAPR is, the smaller the difference (backoff) between the operating point and the threshold value becomes, and thus it is possible to improve the Power Added Efficiency.

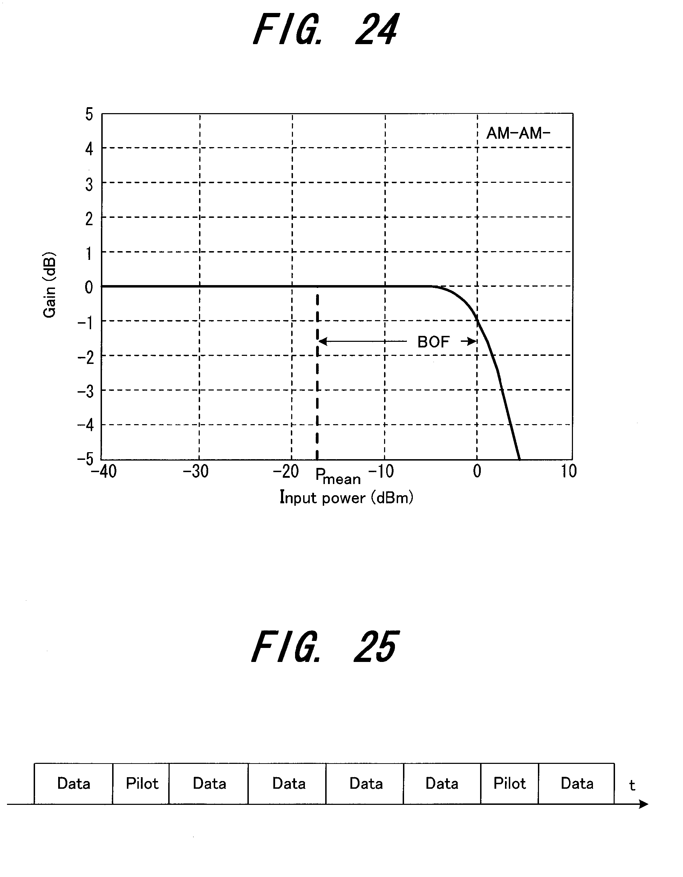

FIG. 24 shows an example of AM-AM characteristics (input power/gain characteristics) of an amplifier in order to explain backoff. When the input power is small, the gain characteristic of an amplifier is flat, and the input/output characteristic is linear. However, when the input power reaches a certain level or greater, the gain begins to become small as well as phase lag occurs and the input/output characteristic becomes non-linear. The output level at which the gain has dropped by 1 dB is called the 1 dB compression level, and the difference between that level and the average output power Pmean is the backoff BOF. In a non-linear amplifier, even though the average power level of an input signal is inside the linear section, a signal at the maximum power level or level near that level exceeds the 1 dB compression level due to balance between the backoff BOF and PAPR, and distortion occurs. Therefore, in consideration of the PAPR, the backoff BOF is decided so that when the input signal reaches the maximum power level, it does not exceed the 1 dB compression level. The smaller the PAPR is, the smaller the backoff BOF becomes, and thus it is possible to improve the Power Added Efficiency of the amplifier. However, as the PAPR increases, the backoff BOF also increases, and the Power Added Efficiency of the amplifier decreases.
• Cubic Metric (CM)
Conventionally, the Peak to Average Power Ratio (PAPR) was often used as an index for evaluating the necessary backoff in the design of an amplifier, however, instead of that, an evaluation index as shown in Equation (1) below and called Raw Cubic Metric has been proposed. The relative backoff is defined in Equation (2) using this Raw Cubic Metric. This value is called the Cubic Metric (CM), and is closer to the actual value than the backoff that is calculated using the PAPR.

$$RawCM = 20 * \log 10((v\_norm^3)_{rms}) \qquad (1)$$

$$CM = \left[RawCM - 20 * \log 10((v\_norm\_ref^3)_{rms})\right]/1.85 \qquad (2)$$

Here, v_norm is the amplitude value of the normalized input signal, and v_norm_ref expresses the amplitude value of a reference signal. The larger that the CM is, the worse the characteristics of the Peak to Average Power Ratio become, and a large backoff becomes necessary. Hereafter, Raw CM and CM will be used with no special distinction between them.

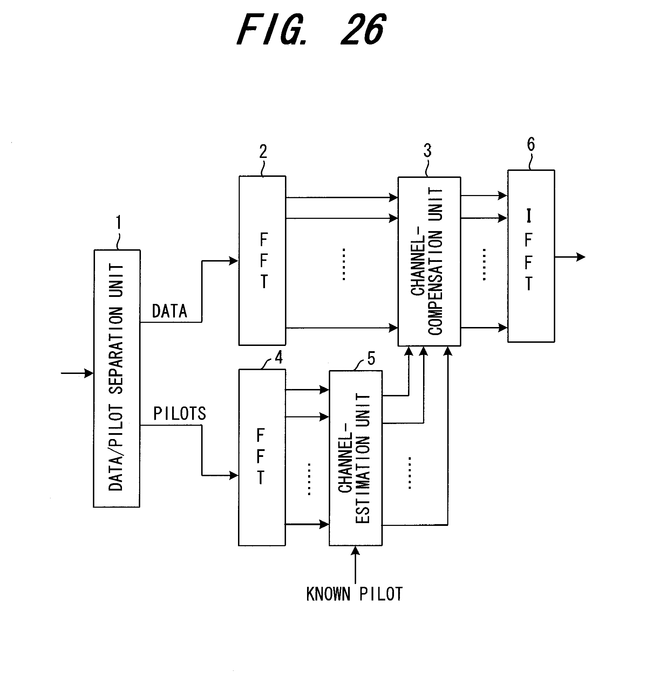

The Orthogonal Frequency Division Multiplexing (OFDM) method has been proposed as an effective radio access method of overcoming frequency selective fading due to multipaths in broadband radio communication. However, OFDM has a problem in that PAPR/CM of the transmission signal is large, and from the aspect of power efficiency of the terminal, it is unsuitable as an UP link transmission method. Therefore, in 3GPP standardization, is proposed a system in which single-carrier transmission is performed as the UP link transmission method, and frequency equalization is performed on the receiving side (refer to non patent document 1). The single-carrier transmission means multiplexing transmission data and pilot signals on only the time axis, and when compared with OFDM in which data and pilot signals are multiplexed on the frequency axis, it is possible to greatly reduce the ratio PAPR/CM. Furthermore, the application of $\pi/2$-BPSK modulation as a method for reducing the PAPR or CM (PAPR/CM) is being studied. Compared with QPSK, in $\pi/2$-BPSK modulation the Eb/No versus BER characteristics are equal, and it is possible to greatly reduce the PAPR/CM.
• Single-carrier transmission
    FIG. 25 shows an example of the frame format used in single-carrier transmission, and FIG. 26 is a drawing for explaining frequency equalization. A frame is configured by performing time-division multiplexing of N samples of both data Data and pilots Pilot, where in FIG. 25 there are two pilots inserted into one frame. When performing frequency equalization, a data/pilot separation unit 1 separates the data Data and the pilots Pilot, then a first FFT unit 2 performs FFT processing of the N sample data to generate N number of frequency components, and inputs the result to a channel-compensation unit 3. A second FFT unit 4 performs FFT processing of the N sample pilots to generate N number of frequency components, and a channel-estimation unit 5 uses those N number of frequency components and N number of frequency components of known pilots to estimate the channel characteristic for each frequency, and inputs channel-compensation signal for each frequency to the channel-compensation unit 3. The channel-compensation unit 3 multiplies each of the N number of frequency components that are output from the first FFT unit 2 by the channel-compensation signal for each frequency, and an IFFT unit 6 performs IFFT processing on the N number of channel-compensated frequency components to convert the signals to a time signal, and outputs the result.

• CAZAC Sequences
    In the single-carrier transmission, when frequency equalization is performed on the receiving side, in order to perform channel estimation in the frequency range with good accuracy, it is preferred that pilot signals have a fixed amplitude in the frequency domain, or in other words, it is preferred that self correlation of the an arbitrary periodic time shift is '0'. On the other hand, from the aspect of the PAPR/CM, it is also preferred that the amplitude is fixed in the time domain. Generalized Chirp Like (GCL) sequences, also known as Constant Amplitude Zero Auto Correlation (CAZAC) sequences have been proposed as pilot sequences that can achieve these characteristics. The equation for calculating a Zadoff-Chu sequence, which is one kind of CAZAC sequence, is given in Equation (3) (refer to Non Patent Documents 2 and 3) Here, k is the number of the CAZAC sequence $c_k(n)$, L is the number of symbols in the CAZAC sequence $c_k(n)$, and n is the symbol number (n = 0 to L-1). In the case where both the integer k and L are prime each other, the sequence length becomes L.

$$c_k(n) = \exp\left[\frac{j\pi k}{L} n(n+1)\right] \quad (L = odd)$$

$$c_k(n) = \exp\left[\frac{j\pi k}{L} n^2\right] \quad (L = even)$$

(3)

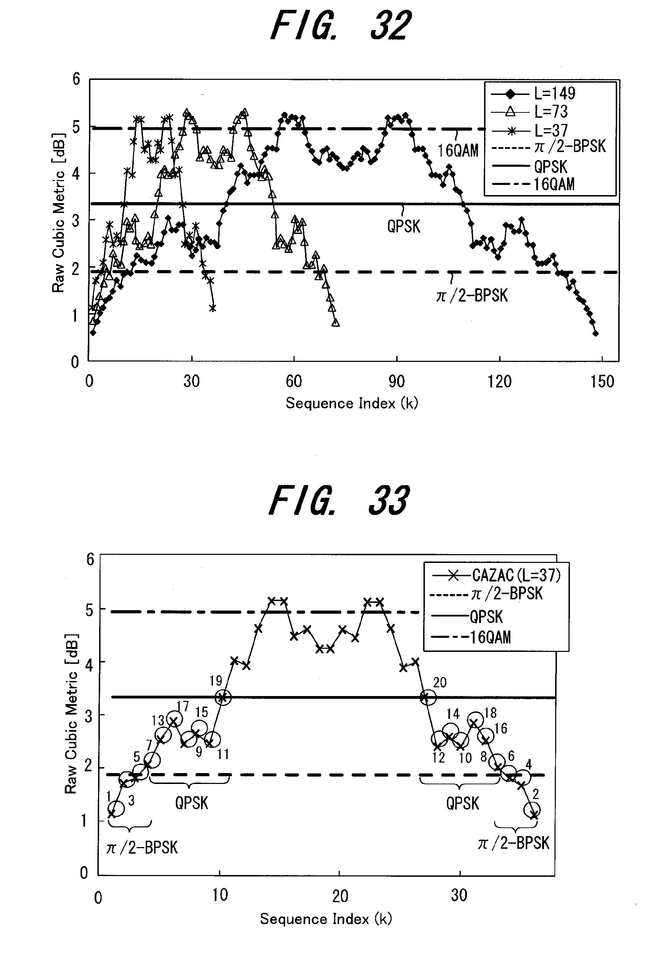

As will be described below, in CAZAC sequences, the PAPR/CM characteristic drastically changes depending on the sequence number k (see FIG. 32). Therefore, when CAZAC sequences having arbitrary numbers are assigned to each of the terminals as pilots, a problem occurs in that there are terminals having decreased reception quality. For example, when a terminal to which a CAZAC sequence having a large PAPR/CM is assigned as pilot signals transmits at the maximum transmission power, non-linear distortion occurs as the peak power of the pilot signals increases, and as a result, a problem occurs in that the reception characteristics deteriorate. However, in order that the reception characteristics do not deteriorate, it is necessary to make the backoff large, which results in a decrease in amplifier efficiency.

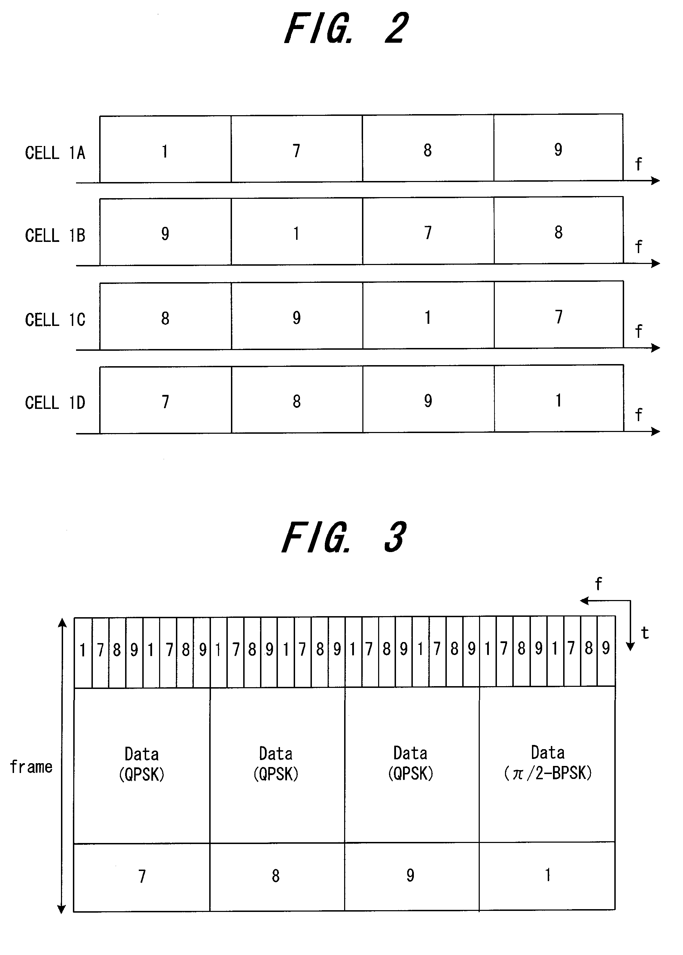

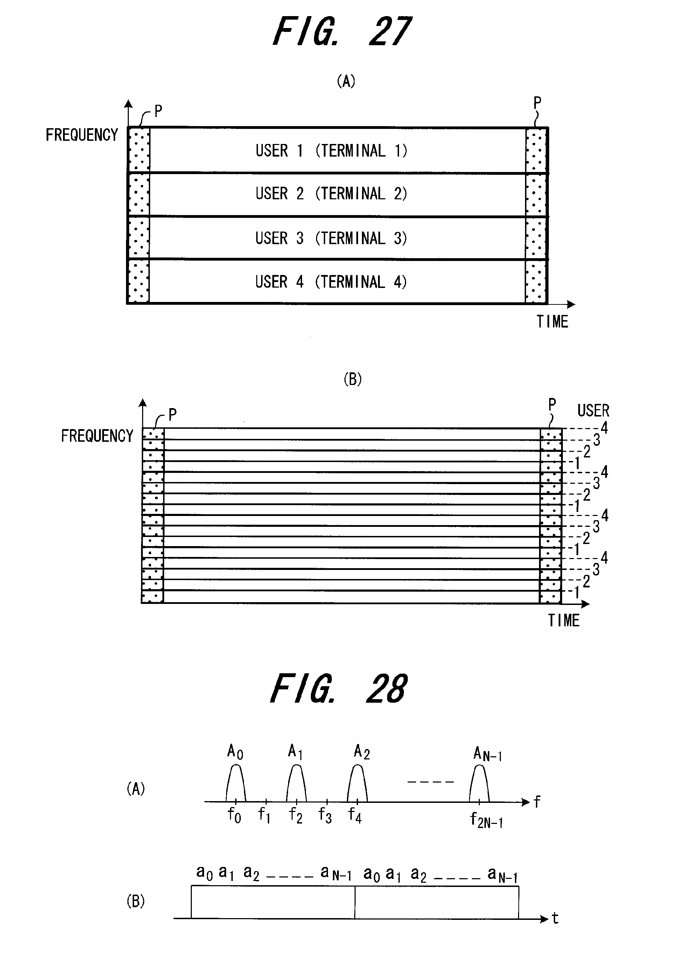

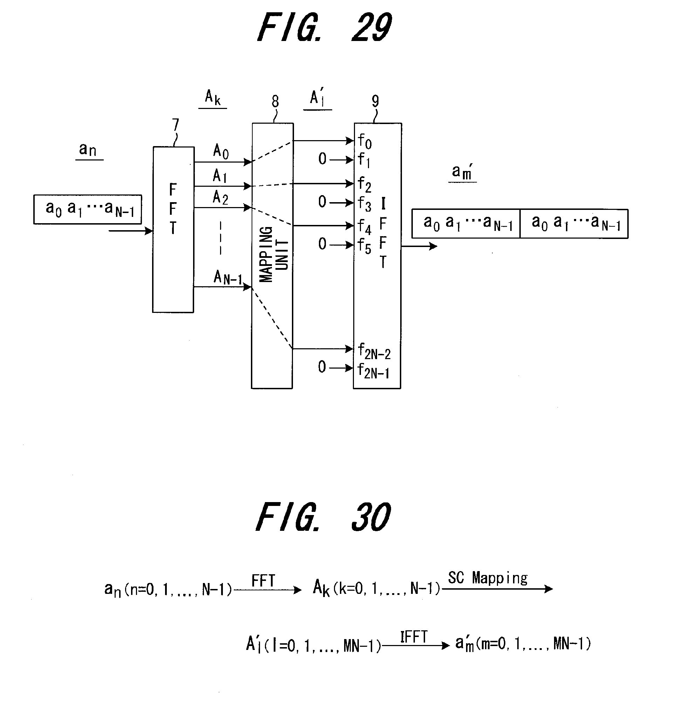

• Localized FDM Method, Distributed FDM Method
In addition to Time Division Multiplexing (TDM) as an UP user multiplexing method in single-carrier transmission, there is the Localized FDM (Frequency Division Multiplexing) method and Distributed FDM. As shown in (A) of FIG. 27 the Localized FDM method is a method in which continuous sub carriers are assigned for each user. Moreover, as shown in (B) of FIG. 27, the Distributed FDM method is a method in which a plural i ty of sub carriers separated by fixed interval are assigned to each of the users and the sub carriers assigned to each of the users are shifted. The Distributed FDM method and Localized FDM method are regard to be a method that signals are transmitted repeatedly along the time axis, and that is, they are regarded to be single-carrier transmission. For example, as shown in (A) of FIG. 28, transmission in the Distributed FDM method in which data $A_0$ to $A_{N-1}$ are mapped onto every other sub carrier is the same as single-carrier transmission in which data $a_0$ to $a_{N-1}$ is repeated two times on the time axis. Therefore, when transmitting N samples of transmission data $a_0$, $a_1$, ..., $a_{N-1}$ using the Distributed FDM method shown in (A) of FIG. 28, the transmission side performs single-carrier transmission using the configuration shown in FIG. 2a. In FIG. 29, a N-sample FFT unit 7 performs FFT processing of the transmission data $a_0$, $a_1$, ..., $a_{N-1}$ to generate sub carrier components $A_0$, $A_1$, ..., $A_{N-1}$, then a mapping unit 8 maps $A_0$, $A_1$, ..., $A_{N-1}$ on the sub carriers $f_0$, $f_2$, ..., $f_{2N-2}$, respectively, and maps '0' on the sub carriers $f_1$, $f_3$, ..., $f_{2N-1}$, then inputs the result to an IFFT unit 9. The IFFT unit 9 performs IFFT processing of 2 x N number of sub carriers to put the transmission data $a_0$ to $a_{N-1}$ into a data string that is repeated two times along the time axis, then inputs the result to a transmission unit (not shown in the figure), which transmits the data using a single carrier.

The fundamentals of the sub carrier mapping described above can be expressed as shown in FIG. 30. Generally, sub carrier mapping in Distributed FDM can be expressed by the following equation, where M is taken to be an arbitrary natural number (in the example shown in FIG. 28, M = 2), and integer L satisfies the relationship $0 \leq L < M$.

$$A_l' = \begin{cases} A_k & l = kM + L \quad (k = 0,1,2,......N-1) \\ 0 & otherwise \end{cases}$$

(4)

FFT and IFFT can be expressed by the equations below,

$$FFT : A_k = \sum_{n=0}^{N-1} a_n e^{-2nk\pi/N}$$

(5a)

$$\text{IFFT}: a_n = \sum_{k=0}^{N-1} A_k e^{j2\pi nk/N} \qquad (5b)$$

and using these equations results in the following equation.

$$a'_m = \sum_{l=0}^{MN-1} A'_l e^{j2\pi ml/MN} = \sum_{k=0}^{N-1} A'_{kM+L} e^{j2\pi m(kM+L)/N}$$
$$= \sum_{k=0}^{N-1} A'_{kM+L} e^{j2\pi mk/N} e^{j2\pi mL/N} = e^{j2\pi mL/N} \sum_{k=0}^{N-1} A_k e^{j2\pi mk/N} \qquad (6)$$

Therefore, it can be seen that the equation for calculating a'$_m$ becomes as shown below, where a'$_m$ is the result of shifting the signal which has been obtained by repeating $a_n$(n = 0, 1, ..., N-1) M timess over L sub carrier frequencies, and can be considered to be a single carrier. The Localized FDM method can also be considered to be a single carrier.

$$a'_m = a'_{iN+n} = e^{j2\pi mL/N} \sum_{k=0}^{N-1} A_k e^{j2\pi mk/N} = e^{j2\pi mL/N} a_n \quad (n = 0,1,\ldots,N-1, i = 0,1,\ldots,M-1)$$

$$(7)$$

be performed by the base station over all bandwidths, however, the channel estimation accuracy deteriorates because the reception power of the pilots per bandwidth decreases. When Local ized FDM is performed for pilot signals, it is not possible to perform frequency scheduling, however, since the reception power of the pilots per bandwidth increases, an improvement in the channel estimation accuracy can be expected. In summary, the following three combinations of a pilot FDM method and data FDM method are feasible. That is,

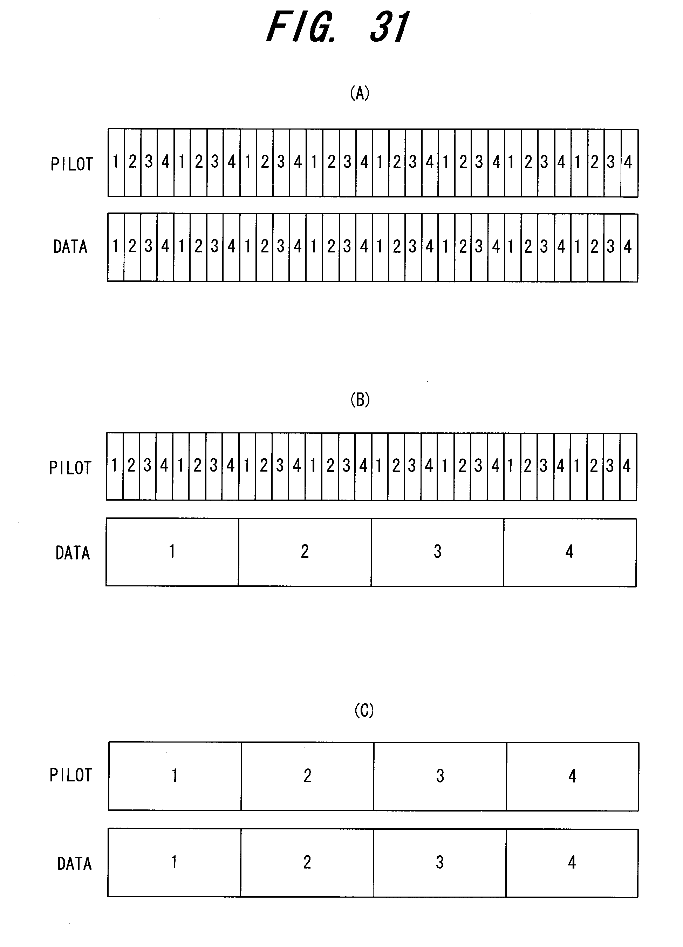

(a) Distributed FDM is performed for pilot signals, and Distributed FDM is performed for data signals (see (A) of FIG. 31);
(b) Distributed FDM is performed for pilot signals, and Localized FDM is performed for data signals (see (B) of FIG. 31); and
(c) Localized FDM is performed for pilot signals, and Localized FDM is performed for data signals (see (C) of FIG. 31). In FIG. 31, the horizontal axis is the frequency, and the numbers indicate user numbers.
In the case of (a) and (c), the frequencies that are assigned to both the users' pilots and data match, so channel compensation of the data at each frequency is possible. However, in the case of (b), channel estimation is not possible for any of the frequencies assigned to the data, so it is necessary to perform channel compensation by using a discretely obtained channel estimation value to find channel estimation values for other frequencies through interpolation. The reason that there is no combination performing Localized FDM for pilot signals and performing Distributed FDM for data signals is that frequencies occur at which channel compensation cannot be performed.

- Problems with the Related Art
FIG. 32 shows the CM characteristic of Zadoff-Chu sequences (CAZAC sequences) having sequence lengths L = 37, 73 and 149. As a reference, CM are also shown for cases in which random sequences are modulated by $\pi$/2-BPSK, QPSK and 16QAM. Moreover, the CM characteristic of a CAZAC sequence having a sequence length L = 37 is shown enlarged in FIG. 33.
As can be seen from FIG. 32, depending on the sequence number of the CAZAC sequence, there are sequences having better CM characteristics than $\pi$/2-BPSK, and there are sequences having worse CM characteristics than 16QAM. Therefore, when sequences having a very large variation in CM characteristics like this are applied to UP link pilot signals, there is a problem in designing the backoff for the amplifier on the terminal side. When the backoff of a user terminal amplifier is designed to be large to correspond with the worst value for the CM characteristic, distortion does not occur regardless of the CM characteristic, however the average power added efficiency becomes poor. On the other hand, when the backoff of an amplifier is designed to correspond to the average value, and when transmission is performed at the maximum or near maximum transmission power, 1 dB compression level is exceeded in a pilot pattern having a poor CM characteristic, so distortion occurs and the transmission efficiency deteriorates.

The sequences above are suitable for channel estimation, however, when sequences such as CAZAC sequences having a large variation in peak to average power characteristics are applied to UP link pilot signals, there is a problem in how to assign pilot sequences to user terminals. When pilot sequences are arbitrarily assigned to each of the users regardless of the CM characteristics as was done conventionally, the power of the pilot signals having large CM characteristics exceeds the backoff and non-linear distortion occurs, causing the reception characteristics to deteriorate.

The backoff is normally designed taking into consideration the CM characteristics of the data, so it is preferred that at least CAZAC sequences having a CM that is less than the CM for the data is used as pilots. However, as is sown in FIG. 32, the number of such sequences is limited. Particularly, sequences having a CM characteristic that is less than $\pi/2$-BPSK are limited, and as can be seen from FIG. 33, in the case where L = 37, there are only six.

When considering repeatedly using pilot sequences (CAZAC sequences) of which there are few in a cell or sector, the case occurs in which a pilot sequence having the same number as that of an adjacent cell is used, which causes large mutual interference to occur between pilot symbols, and thus the accuracy of channel estimation greatly deteriorates.

Here, even though it is possible to obtain the effect of reducing the power consumption of a terminal by adopting $\pi/2$-BPSK for modulating UP link data, by using pilot sequences having a large CM, there is a problem in that the effect is lost.

As can be seen from FIG. 32 and FIG. 33, the number of pilot sequences that can be transmitted at the same time as data increases inconformity with the order of the modulation method (BPSK$\rightarrow$ QPSK$\rightarrow$ 16QAM, etc.). Therefore, it is proposed that pilot sequences that correspond to the modulation methods of each cell are used (see PCT International Patent Application Number PCT/JP2006/302050 (Applicant: Fujitsu Co., Ltd.; Application Date: Feb. 7. 2006).

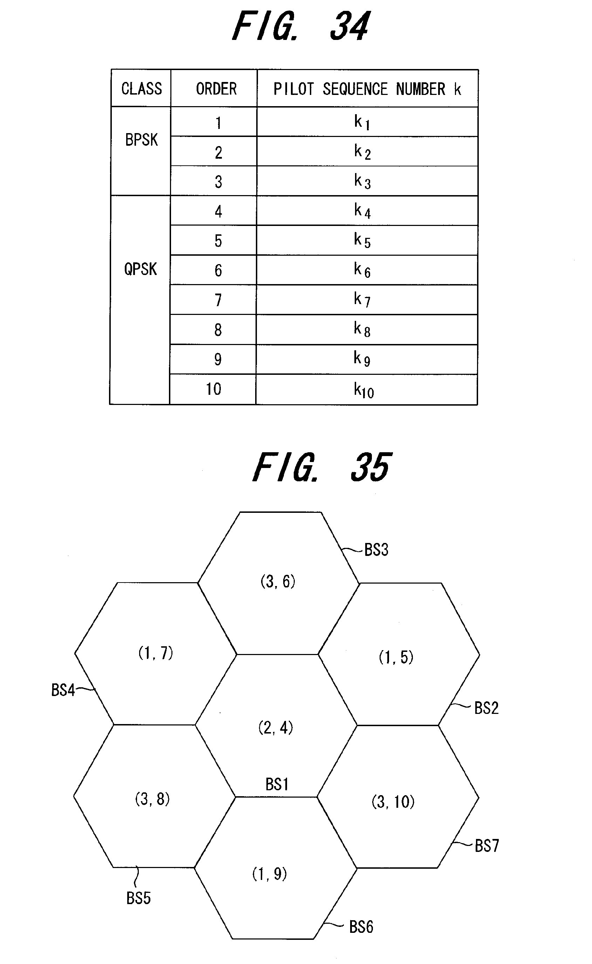

FIG. 34 and FIG. 35 are drawings explaining a proposed method that uses pilot sequences that correspond to the modulation method. As shown in FIG. 34, when CAZAC sequences are put in order based on the CM characteristic, the number of pilot patterns that can be used in the $\pi/2$-BPSK modulation method is 3, with the pilot numbers thereof being $k_1$ to $k_3$, and the number of pilot patterns that can be used in the QPSK modulation method is 7, with the pilot numbers thereof being $k_4$ to $k_{10}$. In that case, in the hexagonal cell arrangement shown in FIG. 35, pilot sequences that are indicated by (m,n) are assigned to the cells BS1 to BS7. Here, m indicates that the mth pilot sequence in order is assigned as the pilot sequence for $\pi/2$-BPSK modulation, and n indicates that the nth pilot sequence in order is assigned as the pilot sequence for QPSK modulation. As shown in FIG. 35, when pilot signals are assigned to each cell, the pilot sequences that are used for adjacent cells are different, and the pilot sequences within the same cell differ for each modulation method.

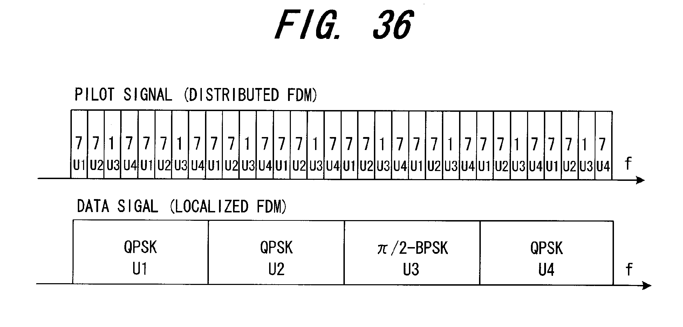

FIG. 36 shows an example in which different pilot signals are assigned for each data modulation method and transmitted using the Distributed FDM method, and data is transmitted using the Localized FDM method, where the numbers 1 and 7 are the sequence numbers in FIG. 33. In FIG. 33, for convenience, sequence numbers are assigned in order of smallest CM, and in the explanation below, sequence numbers that are assigned in order of smallest CM are used.

In FIG. 36, pilot sequence 1 that has a better CM than $\pi/2$-BPSK is assigned as the pilots for user U3 whose data modulation is $\pi/2$-BPSK, and pilot sequence 7 that has a better CM than QPSK is assigned as the pilots for users U1, U2 and U4 whose data modulation is QPSK. By selecting sequence numbers that correspond to the modulation method in this way, it is possible to use (14 sequences for CAZAC sequences for which L = 37 in QPSK, and increase cell repetition number. In other words, for CAZAZ sequences for which L = 37, it is possible to use the same pilot sequence in QPSK every 14 cells, and cell repetition number is increased to 14. However, for $\pi/2$-BPSK, the cell repetition number is 6 for CAZAC sequences for which L = 37 and it is not increased.

Taking the above into consideration, an object of the present invention is to prevent intervention between pilots (pilot sequences) having small CM even when used in adjacent cells or adjacent sectors.

Another object of the present invention is to increase the cell repletion number by substantially increasing the number of pilot sequences having small CM.

Another object of the present invention is to improve the channel estimation accuracy, and make it possible to decide data transmission frequencies using frequency scheduling.

Another object of the present invention is to reduce pilot symbol interference at the ends of a cell.

Another object of the present invention is to increase the number of multiplexings of the same pilot sequence in the same cell.

Non Patent Document 1: 3GPP TS25.101, V7.2.0 (section 6.2.2)

Non Patent Document2: D.C. Chu, "Polyphase Codes With Good Periodic Correlation Properties", IEEE Transactions on Information Theory, pp. 531-532, July 1972

Non Patent Document 3: K. Fazel and S. Keiser, "Multi Carrier and Spread Spectrum Systems," John Willey and Sons, 2003.

DISCLOSURE OF THE INVENTION

A first form of the present invention is a frequency assignment method for assigning frequencies to UP link pilot signals in a radio communication system, comprising: a step of assigning a plurality of pilot sequences having different Peak to Average Power characteristics to each cell or each sector such that they can be used in said each cell or each sector; a step of assigning a plurality of frequencies to each of said pilot sequences that are used for transmitting the pilot sequences by frequency multiplexing; and a step of making the correlation between each of the pilot sequences and said assigned frequencies in adjacent cells or sectors different.

A second form of the present invention is a frequency assignment method for assigning frequencies to UP link pilot signals in a radio communication system, comprising: a step of separating pilot sequences of each cell or each sector into pilot sequences that can be used for channel estimation and pilot sequences that can be used for channel quality measurement; a step of assigning a plurality of frequencies that are used for transmitting a pilot sequence for channel estimation by frequency multiplexing from a narrow frequency band at first frequency interval, and assigning a plural i ty of frequencies that are used for transmitting pilot sequence for channel quality measurement by frequency multiplexing from a wide frequency band at second frequency intervals; and a step of making the correlation between each of the pilot sequences and said assigned frequencies in adjacent cells or sectors different.

A third form of the present invention is a frequency assignment method for assigning frequencies to UP link pilot signal in a radio communication system, comprising: a step of separating pilot sequences of cells or sectors into pilot sequences that can be used at a cell boundary, and pilot sequences that can be used in the center of a cell; a step of assigning a plurality of frequencies to each of the pilot sequences that are used for transmitting the pilot sequences by frequency multiplexing; and a step of making the correlation between each of the pilot sequences and said assigned frequencies in adjacent cells or sectors different.

A fourth form of the present invention is a frequency assignment method for assigning frequencies to UP link pilot signals in a radio communication system, comprising: a step of assigning a plurality of pilot sequences having different Peak to Average Power characteristics to each cell or each sector such that they can be used in said cell each or each sector; a step of assigning a plurality of frequencies to each of the pilot sequences that are used when transmitting the pilot sequences by frequency multiplexing; and a step of shifting the pilot sequences in adjacent cells or sectors.

- Base Station

  A first form of the base station of the present invention comprises: a memory unit that stores the correlation between each of a plurality of pilot sequences having different Peak to Average Power characteristics and a plurality of frequencies that are assigned for transmitting the pilot sequence by frequency multiplexing; a measurement unit that measures the reception quality of signals received from a user terminal; and an instruction unit that makes reference to the correlation and decides a pilot sequence having Peak to Average Power characteristic that corresponds to the reception quality as pilots, then sends an instruction to a user terminal so that the user terminal transmits the pilot sequence using the frequencies assigned to the pilot sequence; wherein the base station makes the correlation between the pilot sequences and said assigned frequencies in adjacent cells or sectors different.

  A second form of the base station of the present invention comprises: a memory unit that stores the correlation between both pilot sequences for channel estimation and pilot sequences for channel quality measurement, and a plurality of frequencies that are used for transmitting each of the pilot sequences using frequency multiplexing; an instruction unit that makes reference to the correlation and decides a pilot sequence for channel quality measurement used when measuring the channel quality, and a pilot sequence for channel estimation used when performing channel estimation, then sends an instruction to a user terminal so that the user terminal transmits each of the pilot sequences using the frequencies assigned to the pilot sequence; a measurement unit that measures channel quality using the pilot sequence for channel quality measurement; a data transmission frequency decision unit that finds a frequency band having good channel quality, and decides the data transmission frequency for the user terminal; a channel estimation unit that performs channel estimation using the pilot sequence for channel estimation; and a frequency equalization unit that performs frequency equalization control based on the channel estimation results; wherein the base station assigns a plurality of frequencies, which are used for transmitting the pilot sequences for channel estimation by frequency multiplexing, from a narrow frequency band at first frequency interval; assigns a plurality of frequencies, which are used for transmitting the pilot sequences for channel quality calculation by frequency multiplexing, from a wide frequency band at second frequency interval; and makes the correlation between each of the pilot sequences and said assigned frequencies in adjacent cells or sectors different.

A third form of the base station of the present invention comprises: a memory unit that stores the correlation between pilot sequences for cell boundaries and pilot sequences for the center of cells, and a plurality of frequencies that are used for transmitting each of the pilots sequences using frequency multiplexing; a judgment unit that determines whether or not a user terminal is located at a cell boundary; and an instruction unit that makes reference to the correlation and decides a pilot sequence for a cell boundary when the user terminal is located at a cell boundary, and a pilot sequence for the center of a cell when a user terminal is not located at a cell boundary, then sends an instruction to the user terminal so that the user terminal transmits the pilot sequence using the frequencies assigned to this pilot sequence; wherein the base station makes the correlation between each of the pilot sequences and said assigned frequencies in adjacent cells or sectors different.

A fourth form of the base station of the present invention comprises: a memory unit that stores the correlation between a plurality of pilots having different Peak to Average Power characteristics, and a plurality of frequencies that are used for transmitting each of the pilot sequences using frequency multiplexing; a measurement unit that measures the reception quality of signals received from a user terminal; and an instruction unit that makes reference to the correlation and decides pilot sequence having Peak to Average Power characteristic that correspond to the reception quality, as well as decides whether or not to shift said pilot sequence, then sends an instruction to the user terminal so that the user terminal uses the frequencies assigned to the pilot sequence to either shift and transmit the pilot sequence or to transmit the pilot sequences wi thout shifting this pilot sequence.

BRIEF DESCRIPTION OF THE DRAWINGS

FIG. 1 is a first explanatory drawing of a method for assigning frequencies to pilot sequences of a first embodiment of the invention (Distributed FDM).
FIG. 2 is a second explanatory drawing of a method for assigning frequencies to pilot sequences of a first embodiment of the invention (Localized FDM).
FIG. 3 is a third explanatory drawing of a method for assigning frequencies to pilot sequences of a first embodiment of the invention (when transmitting by a different FDM method for each pilot block).
FIG. 4 is a drawing explaining the allocation of sequence number for each group.
FIG. 5 is an example of cell arrangement.
FIG. 6 is a drawing showing the construction of a base station of a first embodiment of the invention.
FIG. 7 shows the process flow of a scheduler.
FIG. 8 is a drawing showing the construction of a channel estimation unit and frequency equalization unit.
FIG. 9 shows the process flow of a scheduler for the case in which the user transmits pilots using the Distributed FDM method, and transmits data using the Localized FDM method.
FIG. 10 is a drawing showing the construction of a user terminal of a first embodiment of the invention.
FIG. 11 is a drawingshowing the construction of a frequency assignment unit.
FIG. 12 is a drawing showing other construction of a user terminal.
FIG. 13 is an explanatory drawing of a method for assigning frequencies to pilots for channel estimation and to pilots for SIR measurement.
FIG. 14 is a drawing showing the construction of a base station of a second embodiment of the invention.
FIG. 15 is a drawing showing the construction of a user terminal.
FIG. 16 is an example of assigning frequencies to pilots for cell boundaries and to pilots for the center of a cell in a third embodiment of the invention.
FIG. 17 is a drawing showing the construction of a base station of a third embodiment of the invention.
FIG. 18 shows the process flow of a scheduler.
FIG. 19 is an explanatory drawing of a method (Distributed FDM) for assigning frequencies to pilot sequences of a fourth embodiment of the invention.
FIG. 20 is an explanatory drawing of a method (Localized FDM) for assigning frequencies to pilot sequences of a fourth embodiment of the invention.
FIG. 21 is an example of shifting of pilot sequences.
FIG. 22 is an explanatory drawing of a method for assigning frequencies in the case where pilot sequences that are not shifted within a cell, and pilot sequences that are shifted within a cell are used.
FIG. 23 is a drawing showing the construction of a user terminal.
FIG. 24 is an example of the AM-AM characteristics (input power/gain characteristics) of an amplifier in order to explain backoff.
FIG. 25 is an example of frame format during single-carrier transmission.
FIG. 26 is a drawing explaining frequency equalization.

FIG. 27 is a drawing explaining the Localized FDM method and Distributed FDM.

FIG. 28 is a drawing explaining the Distributed FDM method.

FIG. 29 is a drawing for the case in which single-carrier transmission is performed using the Distributed FDM method.

FIG. 30 is a drawing showing the fundamentals of sub-carrier mapping.

FIG. 31 is a drawing explaining a combination of an FDM method for pilots and FDM method for data.

FIG. 32 shows CM characteristics of Zadoff-Chu sequences (CAZAC sequences) having sequence lengths L = 37, 73 and 149.

FIG. 33 shows the CM characteristics for CAZAC sequences having a sequence length L = 37.

FIG. 34 is a drawing explaining a method of using pilot sequences that correspond to the modulation method.

FIG. 35 is a drawing explaining cell arrangement in a method of using pilot sequences that correspond to the modulation method.

FIG. 36 is an example of assigning different pilot sequences for each data modulation method, then transmitting the pilots using the Distributed FDM method and transmitting data using the Localized FDM method.

BEST MODE FOR CARRYING OUT THE INVENTION

(A) First Embodiment

(a) Method of Assigning Frequencies to Pilot Sequences

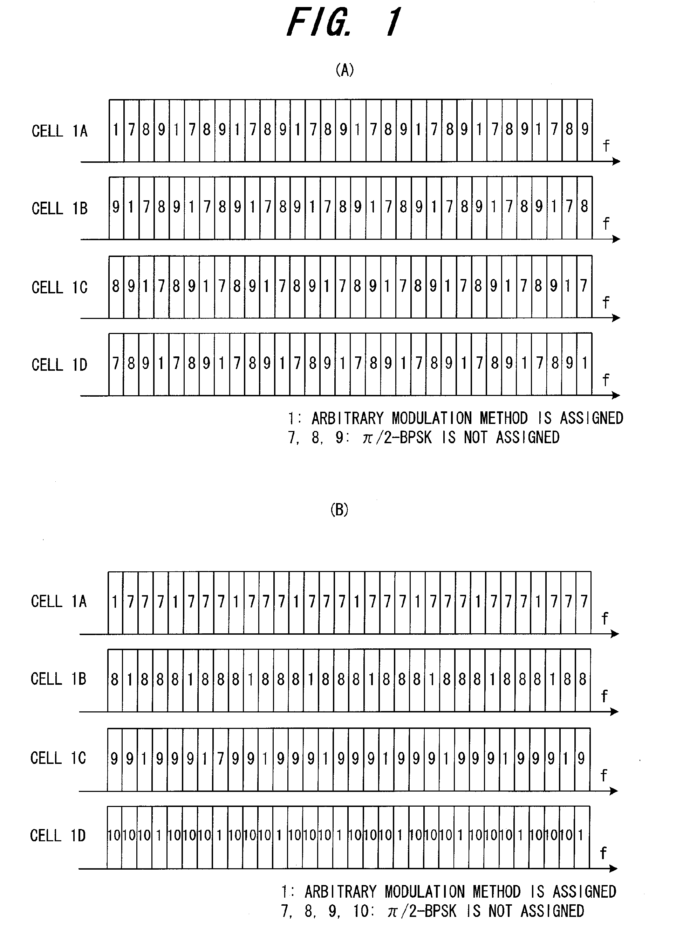

FIG. 1 to FIG. 3 are explanatory drawings of methods for assigning frequencies to each of the pilot sequences of a first embodiment of the invention, where the horizontal axis is the frequency and the numerical values are the pilot sequence numbers. In the examples shown in FIG. 1 to FIG. 3 four adjacent cells 1A, 1B, 1C and 1D can use the pilot sequences 1, 7, 8 and 9 (see FIG. 33). For pilot sequence 1, the CM is less than $\pi/2$-BPSK, so pilot sequence 1 can be used in an arbitrary modulation method, and for pilot sequences 7, 8 and 9, the CM is larger than $\pi/2$-BPSK but less than QPSK, so they can be used for modulation methods other than $\pi/2$-BPSK. Each of the embodiments of the present invention is not limited to cells and can also be applied to sectors, however, in the explanation below, only the case of applying the invention to cells will be explained.

In the present invention, in order to increase the cell repletion number of pilot sequences, a plurality of frequencies are assigned to each pilot sequence for transmitting pilot sequences by frequency multiplexing, and the correlation between each of the pilot sequences and the assigned frequencies is made to be different for the four adjacent cells 1A, 1B, 1C and 1D. A base station uses a DOWN notification channel to notify user terminals wi thin a cell of the decided correlation between each of the pilot sequences and frequency bands (the correlation is referred to as a pilot sequence assignment table).

An example is shown in (A) and (B) of FIG. 1 of multiplexing and transmitting pilot sequences using Distributed FDM. In (A) of FIG. 1, pilot sequences 1, 7, 8 and 9 are cyclically assigned to each frequency in the cells 1A, 1B, 1C and 1D, with the correlation between the pilot sequences and frequencies for each cell being a one-frequency shift. In (B) of FIG. 1, pilot sequence 1 is assigned to frequencies in the cells 1A, 1B, 1C and 1D at a four-frequency interval, such that the frequency at which pilot sequence 1 is assigned shifts for each cell. Moreover, pilot sequences 7, 8, 9 and 10 are assigned to the remaining frequencies in cells 1A, 1B, 1C and 1D, respectively.

FIG. 2 is an example of multiplexing and transmitting pilot sequences using Localized FDM, where the correlation between each of the pilot sequences and the assigned frequencies shifts for each cell 1A, 1B, 1C and 1D.

FIG. 3 is an example of multiplexing and transmitting pilot sequences using different FDM methods (Distributed FDM, Local ized FDM) for each pilot block in the case where there is a plurality of pilot blocks in one frame. In each FDM method, it is necessary to shift the correlation between the frequency and pilot sequence for each cell.

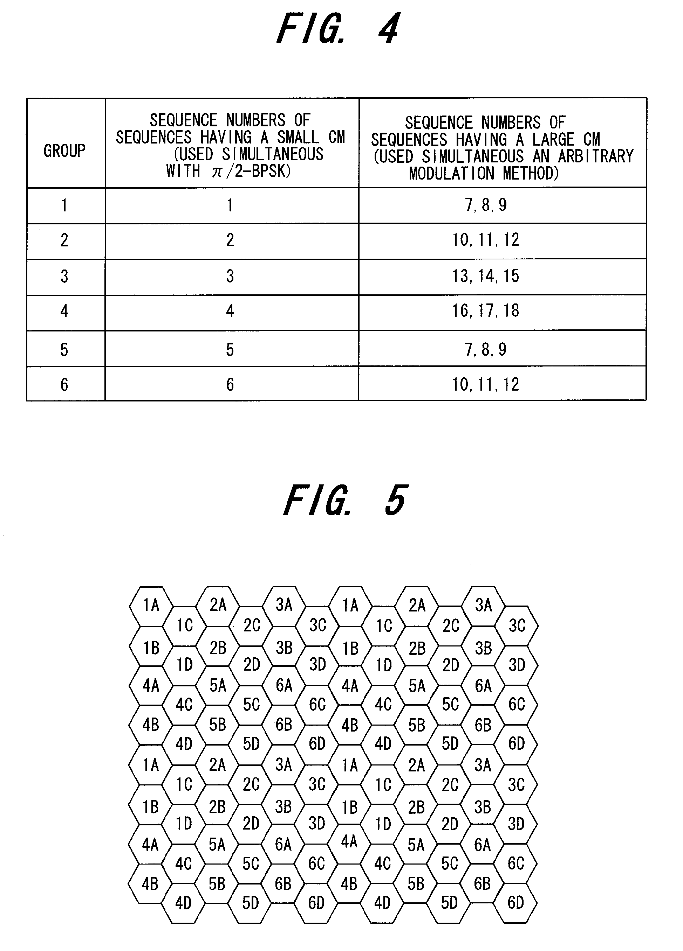

In the assignment method for the pilot sequences shown in (A) of FIG. 1, it is possible to use the same pilot sequence group (sequence numbers 1, 7, 8 and 9) for the four cells 1A, 1B, 1C and 1D. Of the CAZAC sequences shown in FIG. 33 having L = 37, there are six sequences (sequences 1 to 6) whose CM characteristic is less than $\pi/2$-BPSK, and there are fourteen sequences (sequences 7 to 20) whose CM characteristic is less than QPSK. Therefore, when the pilot sequences are divided into six groups as shown in FIG. 4, it is possible to use the pilot sequences of each group in each of the four cells as in the case shown in (A) of FIG. 1. By taking the four cells of the groups 1 to 6 to be 1A to 1D, 2A to 2D, 3A to 3D, 4A to 4D, 5A to 5D and 6A to 6D, it is possible to arrange the cells as shown in FIG. 5. Conventionally, sequences 1 to 6 having a CM characteristic less than $\pi/2$-BPSK were repeatedly used in each cell, (the cell repetition number = 6), and pilot symbol interference occurred among neighboring cells; however, by forming groups as shown in FIG. 4, the cell repetition can be substantially made to 24, as well as it is possible to eliminate pilot symbol interference among neighboring cells.

As a detailed example, it is assumed that there are two modulation methods in the system, $\pi/2$-BPSK and QPSK, where the number of CAZAC sequences having a CM that is less than $\pi/2$-BPSK is taken to be N1, and the number of CAZAC sequences having a CM that is greater than $\pi/2$-BPSK but less than QPSK is taken to be N2. Moreover, the number of FDM multiplexings is taken to be R, and of those, the number assigned to $\pi/2$-BPSK is taken to be R1, and the number assigned to QPSK is taken to be R2 (R = R1 + R2). Here, with the method of assigning frequencies to pilot sequences of the present invention, the respective numbers of repetition (repetition number) are as shown below.

$$S1 = R \times [N1/R1] \quad \text{(Repetition number of } \pi/2\text{-BPSK)}$$

$$S2 = R \times [N2/R2] \quad \text{(Repetition number of QPSK)}$$

Here, [·] indicates an integer after el iminating the decimal portion. With the method of assigning pilot sequences of the present invention, it is possible to increase the reception number in comparison with the original repetition number N1 and N2. Normally, there is a problem that N1 is a small number, or in other words the reception number of CAZAC sequences having a CM that is less than $\pi/2$-BPSK is a small number. But by making R1 less than R2 it is possible to increase S1 and solve the problem. As a demerit, there is a problem in that the number of $\pi/2$-BPSK simultaneous transmission terminals in a cell is limited (R1 for a maximum of R). However, terminals that perform communication using $\pi/2$-BPSK are in special conditions such as being near the cell end (cell boundary), and normally it is hard for a condition to occur in which a plurality of terminals would perform communication simultaneously using $\pi/2$-BPSK. On the other hand, CAZAC sequences having a CM that is less than QPSK can be assigned to any frequency range, so there is no limit for QPSK.

To explain this with a numerical example, as shown in FIG. 33, when L = 37 and R = 4, N1 = 6 and N2 = 14, and when R1 and R2 are taken to be R1 = 1 and R2 = 3, then S1 and S2 are calculated to be S1 = 24 and S2 = 16. In other words, when compared with the technology disclosed in PCT International Patent Application Number PCT/JP2006/302050, it is possible to increase the cell repetition number of CAZAC sequences from 6 to 24, and from 14 to 16. The cell arrangement in this case is as shown in FIG. 5.

(b) Base Station of the First Embodiment

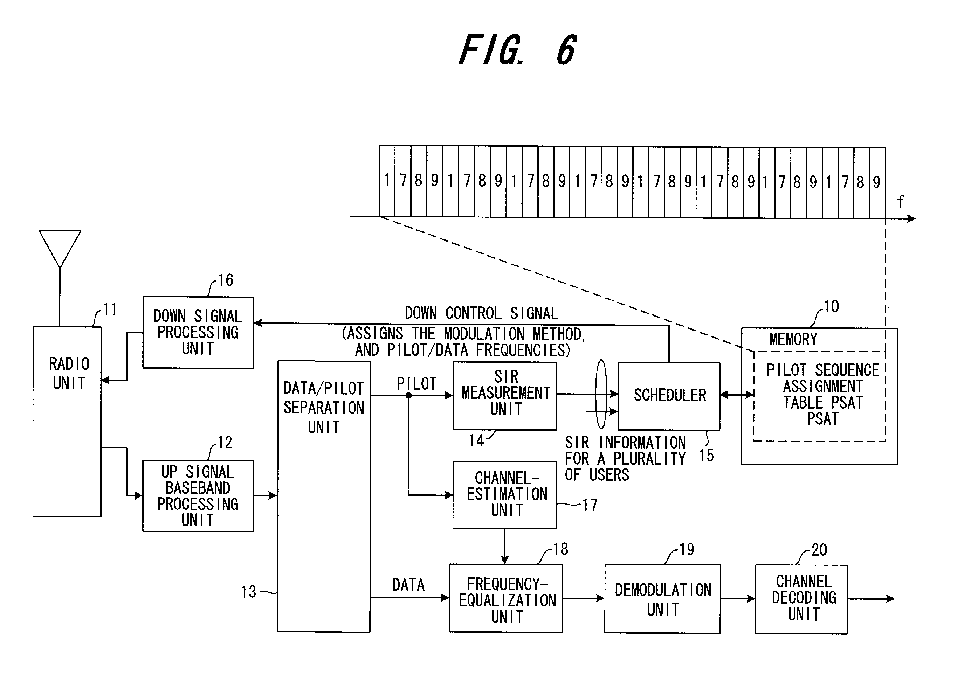

FIG. 6 is a drawing showing the construction of a base station of the first embodiment of the invention, and is for the case in which a user terminal (hereafter called the user) transmits both pilots and data using the Distributed FDM method. When pilots and data are both transmitted using the Distributed FDM method, the transmission frequencies for the pilots and data are the same.

The correlation between each of the pilot sequences that can be used in a cell and the frequency band assigned to each of the pilot sequences (pilot sequence assignment table PSAT) is saved in a memory 10. For example, the correlation shown in (A) of FIG. 1 is saved in memory 10 as a pilot sequence assignment table PSAT.

A radio unit 11 comprises a transmitter and receiver, and the receiver converts the frequency of a signal received from a user from a radio frequency to a baseband frequency and inputs the result to an UP signal baseband processing unit 12. The baseband processing unit 12 demodulates time-division multiplexed data from the input signal (see FIG. 25), and a data/pilot separating unit 13 separates the pilots and data from the time-multiplexed data. A SIR measurement unit measures the SIR of the received signal and inputs the result to a scheduler 15.

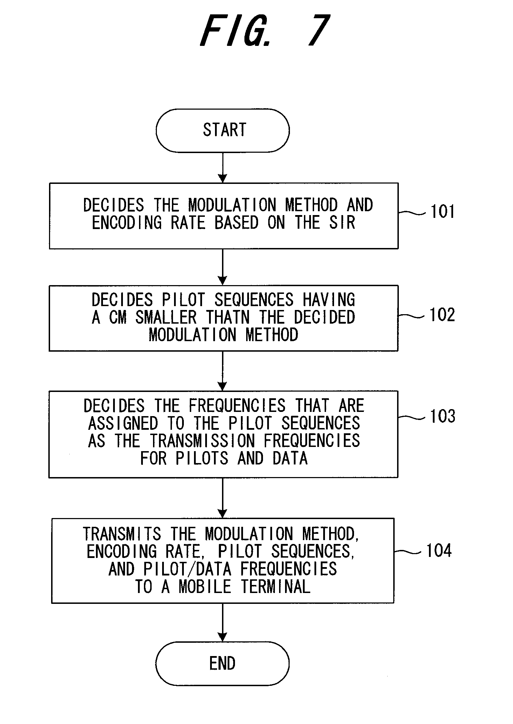

The scheduler 15 decides the user modulation method, pilot sequence numbers and the like according to the process flow shown in FIG. 7. That is, the scheduler 15 adaptively decides user modulation method and encoding rate based on the measured SIR (step 101). When the SIR is large, the scheduler 15 selects QPSK as the modulation method, and when the SIR is small, selects $\pi/2$-BPSK. Next, the scheduler 15 makes reference to the pilot assignment table PSAT, and decides pilot sequence having a CM smaller than the modulation method that was decided in step 101 as the pilot sequence (step 102). In other words, making reference to the table PSAT, pilot sequences 1, 7, 8 and 9 are assigned for the cell, and since the CM for pilot sequence 1 is smaller than $\pi/2$-BPSK, and the CM for pilot sequences 1, 7, 8 and 9 is smaller than QPSK, the scheduler decides pilot sequence 1 as the pilot sequence to be used when the modulation method is $\pi/2$-BPSK, and decides any of the pilot sequences 1, 7, 8 and 9 as the pilot sequence to be used when the modulation method is QPSK.

Next, the scheduler 15 makes reference to the table PSAT to find the plurality of frequencies that are assigned to the decided pilot sequence (step 103). These frequencies are frequencies that are used when the user transmits pilots and data using the Distributed FDM method. After that, the scheduler 15 inputs the modulation method, encoding rate, pilot sequence numbers, and pilot/data frequencies that were set in steps 101 to 103 to a DOWN baseband processing unit 16. The DOWN baseband processing unit 16, performs OFDM transmission processing for example, and transmits the aforementioned data to a user via a radio unit 11 (step 104). In this way, a user is able to transmit time-division multiplex data comprising pilots and data based on an instruction from a base station.

After receiving a signal from a user, the baseband processing unit 12 demodulates the time-division multiplexed data, and the data/pilot separating unit 13 separates the pilots and data from the time-division multiplex data and inputs the result to a channel-estimation unit 17 and frequency-equalization unit 18.

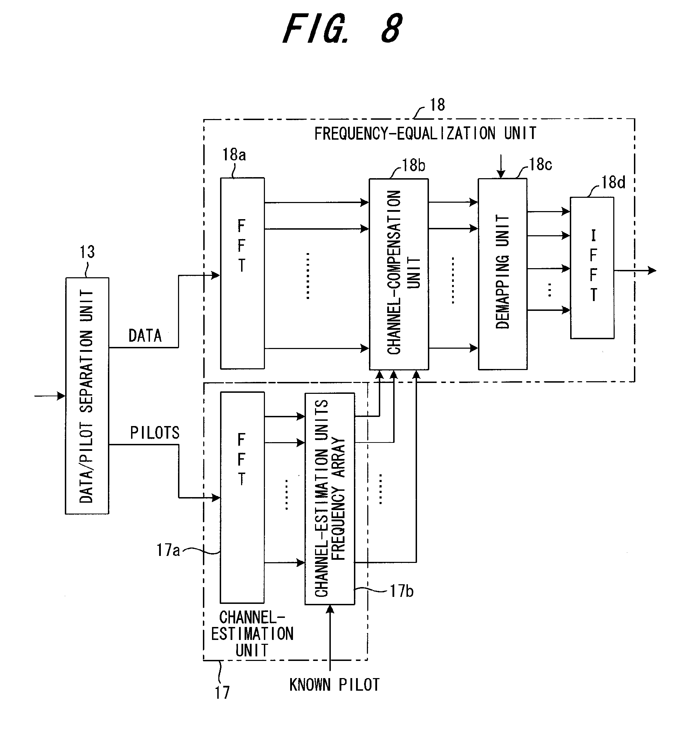

The channel-estimation unit 17 and frequency-equalization unit 18 comprise the construction shown in FIG. 8, and perform frequency equalization control. In the channel-estimation unit 17, a FFT unit 17a performs FFT processing of the N x M sample pilots to generate N x M frequency components, then channel-estimation units 17b for each frequency use those N x M number of frequency components and N x M number of frequency components of known pilots to perform channel estimation for each frequency and input channel compensation signals to the channel-compensation unit 18b of the frequency-equalization unit 18.

A FFT unit 18a of the frequency-equalization unit 18 performs FFT processing on the N x M sample data to generate N x M number of frequency components and inputs the results to the channel-compensation unit 18b. The channel-compensation unit 18b performs channel compensation by multiplying the N x M number of frequency components that were output from the FFT unit 18a with the channel-compensation signals for each frequency, after which a demapping unit 18c selects N number of frequency components from among the N x M number of frequency components based on frequencies that were used when transmitting data using the Distributed FDM method, and inputs the results to an IFFT processing unit 18d (demapping). The IFFT processing unit 18d performs IFFT processing of the N number of frequency components to create a time signal, and outputs the result. A demodulation unit 19 demodulates the encoded data, and a channel-decoding unit 20 performs decoding and outputs the result.

In a case where the base station notifies a user of the pilot sequence assignment table PSAT by way of the DOWN notification channel, the base station does not have to send the transmission frequency data of the pilots and data to the user. The user can find the transmission frequencies of the pilots and data by reference to the table PSAT from the pilot sequence numbers. Moreover, it is also possible for the base station to notify the user of the assignment frequencies, and for the user to decide pilot sequence number by reference to the table PSAT from the frequencies.

In the explanation above, the user transmits both pilots and data using the Distributed FDM method, however, the transmission frequencies of the pilots and data are the same even when the user transmits pilots and data using the Localized FDM method, and similar control is performed.

Moreover, when the user transmits pilots using the Distributed FDM method and transmits data using the Localized FDM method, the transmission frequencies of the pilots and the data are not the same. In this case, the base station decides the transmission frequencies for the pilots as explained in FIG. 6, and decides the transmission frequency for data according to frequency scheduling.

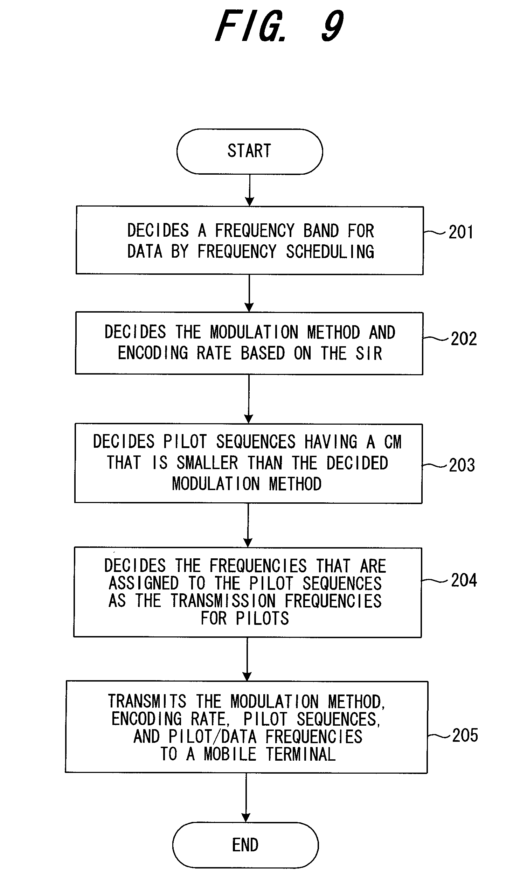

FIG. 9 is a flowchart showing the processing by the scheduler for the case in which a user transmits pilots using the Distributed FDM method, and transmits data using the Localized FDM method.

The SIR unit 14 measures the SIR for each frequency based on the pilot signals that are sent from the user using Distributed FDM. The scheduler 15 finds a frequency band that is favorable for communication by reference to the SIR for each frequency, then decides the data transmission frequencies from that frequency band (scheduling, step 201). After that, the scheduler 15 performs the same processing of steps 101 to 104 shown in FIG. 7 to decide the modulation method, encoding rate, pilot sequence number, and pilot transmission frequencies, and transmits these and the data transmission frequencies found in step 201 to the user (steps 202 to 205).

(c) User Terminal of the First Embodiment

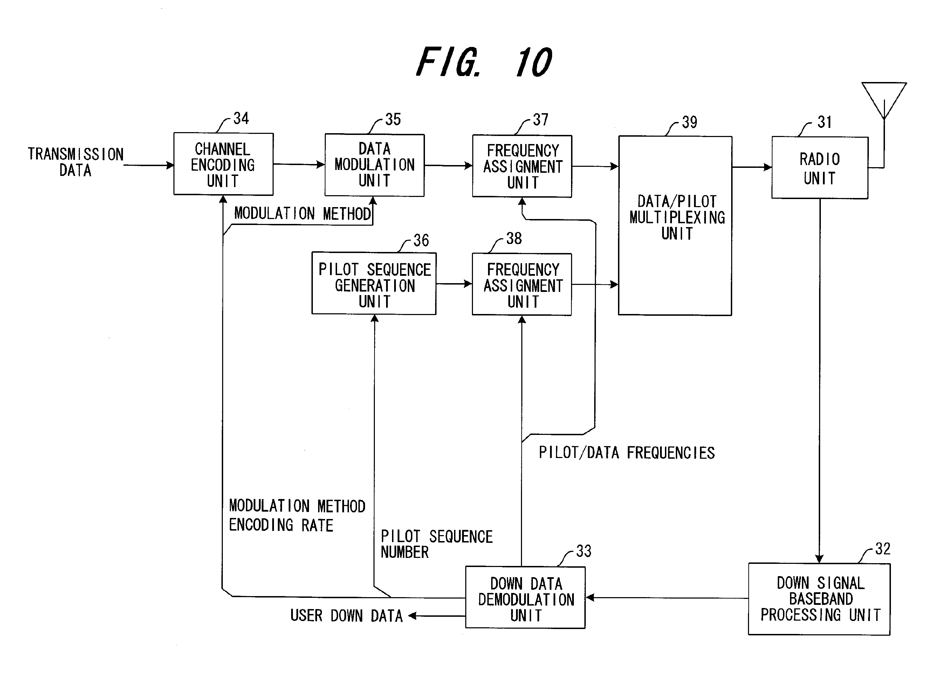

FIG. 10 is a drawing showing the construction of a user terminal of this first embodiment of the invention.

A radio unit 31 comprises a transmitter and receiver, where the receiver converts a received signal from a radio frequency to a baseband frequency and inputs the result to a DOWN signal baseband processing unit 32. The baseband processing unit 32 performs receiving processing, for example OFDM receiving processing, of the input signal, and inputs the result to a data modulation unit 33, after which the data modulation unit 33 demodulates the received data. A channel-encoding unit 34 performs encoding based on the encoding rate that is specified from the base station, a data-modulation unit 35 performs data modulation based on the modutation method that is specified by the base station, and a pilot sequence generation unit 36 generates pilots of the pilot sequence number that is specified by the base station.

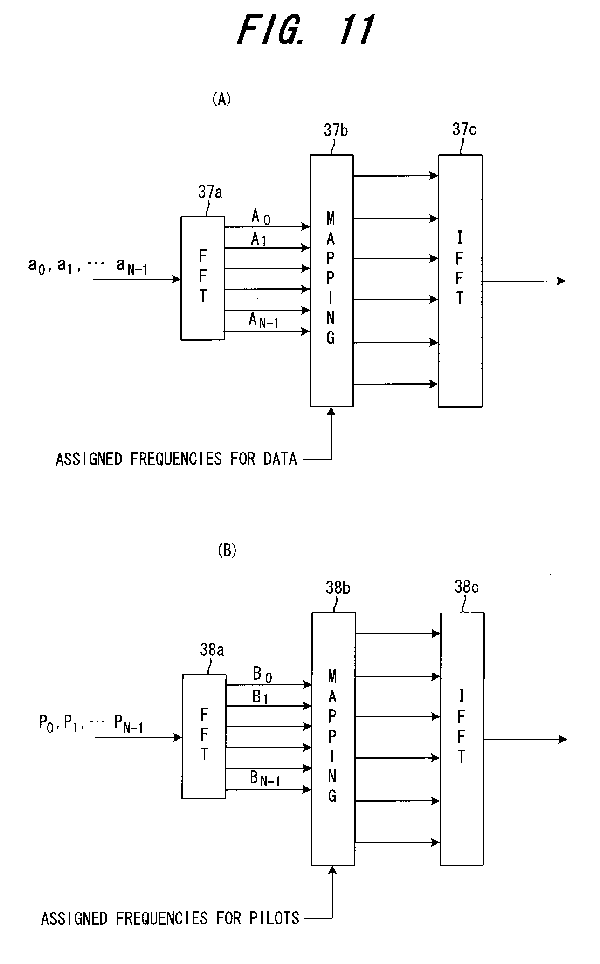

A frequency-assignment unit 37 comprises the construction shown in (A) of FIG. 11, and makes it possible to perform Distributed FDM data transmission using single-carrier transmission. A FFT unit 37a performs FFT processing of N samples of transmission data $a_0$, $a_1$, ..., $a_{N-1}$ to generate frequency components $A_0$, $A_1$, ..., $A_{N-1}$, and a mapping unit 37b maps $A_0$, $A_1$, ..., $A_{N-1}$, onto the data transmission f requenc i es, and maps '0' onto the remaining frequencies, then inputs the result to an IFFT unit 37c. The IFFT unit 37c performs IFFT processing of M x N number of frequency components to create a data string in which the transmission data $a_0$ to $a_{N-1}$ is repeated on the time axis M times, and outputs the result.

The mapping unit 37b maps the transmission signal that has undergone FFT onto continuous sub carriers (frequencies) when using Localized FDM, and maps the signal onto sub carriers that have been spaced by a set interval when using Distributed FDM, after which the signal is converted to the time domain again by IFFT and output.

The frequency-assignment unit 38 comprises the construction shown in (B) of FIG. 11, and makes it possible to perform Distributed FDM transmission using single-carrier transmission. A FFT unit 38a performs FFT processing of N samples of pilots $p_0$, $p_1$, ..., $P_{N-1}$ to generate frequency components $B_0$, $B_1$, ..., $B_{N-1}$, and a mapping unit 38b maps $B_0$, $B_1$, ..., $B_{N-1}$ onto the pilot transmission frequencies, and maps '0' onto the remaining frequencies, then inputs the result to an IFFT unit 38c. The IFFT unit 38c performs IFFT processing of M x N number of frequency components to create a data string in which the pilots $p_0$ to $p_{N-1}$ are repeated on the time axis M times, and outputs the result.

A data/pilot multiplexing unit 39 performs time multiplexing of the data and pilots that are output from each of the frequency-assignment uni ts 37, 38, and inputs the result to the radio unit 31. The transmitter of the radio unit 31 converts the frequency of the baseband signal to a radio frequency, after which it amplifies the signal and transmits it to the base station.

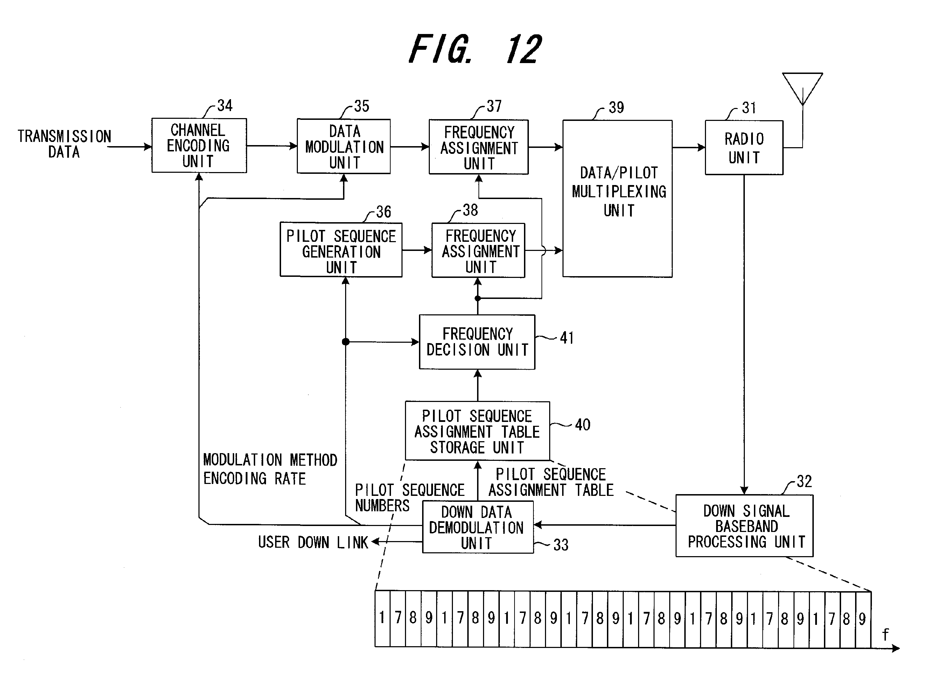

FIG. 12 is a drawing showing the construction of a user terminal for the case in which a base station notifies a user of a pilot sequence assignment table PSAT by way of a DOWN notification channel.

This user terminal differs from the user terminal shown in FIG. 10 in that (1) a storage unit 40 stores a pilot sequence assignment table PSAT, and (2) a frequency decision unit 41 uses the pilot sequence assignment table PSAT from pilot sequence number that is notified from the base station to decide frequencies to be used when transmitting pilots and data, and inputs the result to frequency assignment units 37, 38.

With this first embodiment, it is possible to eliminate interference between pilots having the same sequence number by making the used band different even when using pilots having the same sequence numbers in adjacent cells. As a result, with this first embodiment, it is possible to substantially increase the number of pilot sequences having a small CM, and thus it is possible to increase the cell repetition number.

(B) Second Embodiment

There are two purposes that pilots are used for; channel estimation and SIR measurement for adaptive modulation scheduling. Pilots for channel estimation only need the same frequency band as data, however, in order for accurate channel estimation, high quality is desired. On the other hand, pilots for SIR measurement require a wide bandwidth in order to perform frequency scheduling, however, there is not as much a need for quality as in the case of channel estimation. Therefore, by separating and transmitting pilots according to usage it is possible to improve transmission efficiency of the pilots.

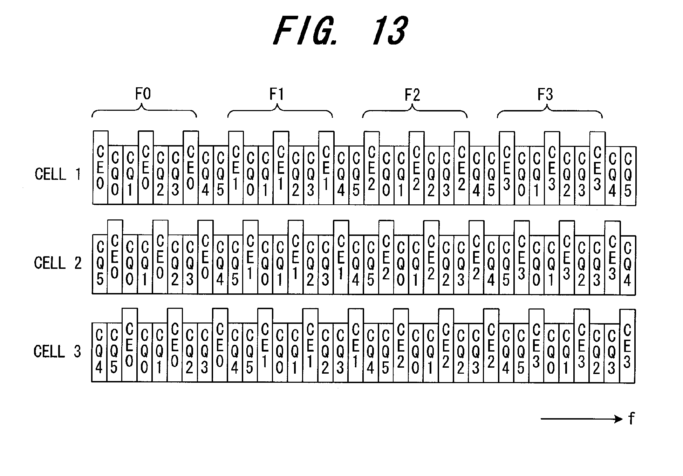

FIG. 13 is an explanatory drawing of a method for assigning frequencies to pilots for channel estimation and for pilots for SIR measurement, where the horizontal axis is the frequency. In the figure, CE0 to CE3 are pilot sequences for channel estimation, and CQ0 to CQ5 are pilot sequences for SIR measurement. A narrow band of frequencies F0 to F3 is assigned to the pilot sequences CE0 to CE3 for channel estimation at a specified interval between frequencies, however, frequencies over the entire frequency band are assigned to the pilot sequences CQ0 to CQ5 at different frequency intervals.

High quality is required for channel estimation, so pilot sequences having a small CM are used as the pilot sequences CE0 to CE3 for channel estimation, and pilot sequences having a relatively large CM are used as pilot sequences for SIR measurement, with different frequencies being assigned to each of the pilot sequences CE0 to CE3, and CQ0 to CQ5 among adjacent cells. Moreover, pilots for SIR measurement may have a lower quality than pilots for channel estimation, so it is possible to reduce interference among pilots for channel estimation by decreasing the transmission power.

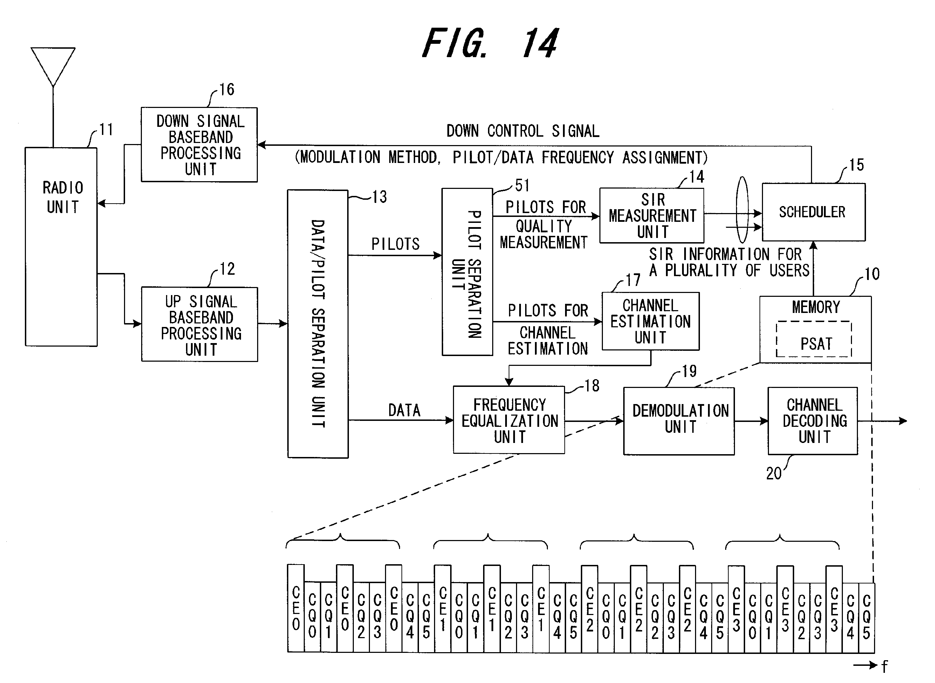

FIG. 14 is a drawing showing the construction of a base station of a second embodiment of the invention, where the same reference numbers are used for parts that are the same as those of the first embodiment shown in FIG. 6. This base station differs in that (1) the correlation between the pilot sequence numbers that can be used for channel estimation and the pilot sequence numbers that can be used for SIR measurement, and the frequencies that are assigned to these pilot sequences (pilot sequence assignment table PSAT) is saved in a memory 10, and (2) a pilot separation unit 51 is provided that separates pilots for SIR measurement and pilots for channel estimation and inputs them to a SIR measurement unit 14 and channel-estimation unit 17, respectively.

Before data transmission, the base station specifies a certain pilot sequence number for SIR measurement and a user terminal transmi ts the pilots having this sequence number to the base station using distributed FDM.

A baseband processing unit 12 of the base station demodulates the input data, a data/pilot separation unit 13 separates the pilots from the data, and a pilot separation unit 51 separates the pilots for SIR measurement from the pilots and inputs them to a SIR measurement unit 14. The SIR measurement unit 14 measures the SIR for each frequency based on the pilot signals for SIR measurement that were sent from the user using the Distributed FDM method.

A scheduler 15 makes reference to the SIR for each frequency and finds a frequency band $(F_0 \sim F_3)$ that is

favorable for communication and decides frequencies to be used when a user transmi ts data by the Localized FDM method (frequency scheduling). Moreover, the scheduler 15 makes reference to the table PSAT to find a pilot sequence for channel estimation to which the frequencies for data transmission are assigned, and decides the frequencies assigned to the those pilot sequence as pilot transmission frequencies. After that, the scheduler 15 decides the modulation method and encoding rate in the same way as in the first embodiment and instructs the user of the decided data transmission frequencies, pilot sequence number, pilot transmission frequencies, modulation method and encoding rate. The user transmits time-division multiplexed data comprising pilots for channel estimation and data based on the instruction from the base station.

The baseband processing unit 12 of the base station demodulates the time-division multiplexed data that was transmitted from the user, then the data/pilot separation unit 13 separates the pilots and data from the time-division multiplexed data, and inputs them to the pilot-separation unit 51 and frequency-equalization unit 18. The pilot-separation unit 51 separates out the pilots for channel estimation and inputs them to the channel-estimation unit 17. The channel-estimation unit 17 and frequency-equalization unit 18 perform the same frequency equalization control as was done in the first embodiment, after which a demodulation unit 19 demodulates the data that was encoded from the output of the frequency-equalization unit 18, and a channel-decoding unit 20 decodes and outputs that encoded data.

When the base station notifies the user of the pilot sequence assignment table PSAT by way of a DOWN notification channel, it is not necessary to send the transmission frequency data for the pilots and data to the user from the base station.

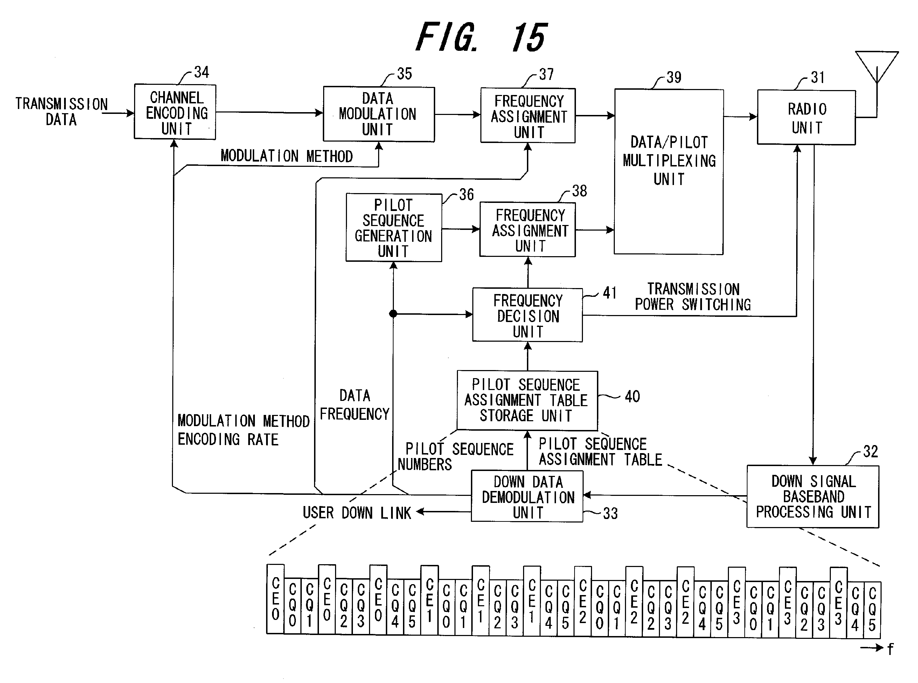

A user terminal of this second embodiment of the invention can have the same construction as in the first embodiment shown in FIG. 10. Moreover, when the base station notifies a user terminal of the pilot sequence assignment table PSAT by way of the notification channel, the construction of the user terminal is as shown in FIG. 15.

In FIG. 15, the user terminal differs from that shown in FIG. 10 in that (1) a storage unit 40 stores the pilot sequence assignment table PSAT, and (2) a frequency decision unit 41 makes reference to the pilot sequence assignment table PSAT from the pilot sequence number that are specified by the base station, then decides frequencies to be used when transmitting pilots using the Distributed FDM method and inputs the result to a frequency-assignment unit 38.

With this second embodiment, it is possible to improve the accuracy of the channel estimation, and by performing frequency scheduling, it is possible to transmit data using a good frequency band. Moreover, by making the frequency bands that are used between different adjacent cells , it is possible to el iminate interference among pilots having the same sequence numbers even though pilot sequences having a small CM are used as pilots for channel estimation in adjacent cells.

(C) Third Embodiment

Interference between cells also occurs between pilot signals having different sequence numbers. This interference is not as big as the interference between pilot signals having the same sequence number, however, for users near the end of a cell (cell boundary) it is something that cannot be ignored. Therefore, for users at the cell ends it is necessary that the pilot frequencies of adjacent cells do not overlap.

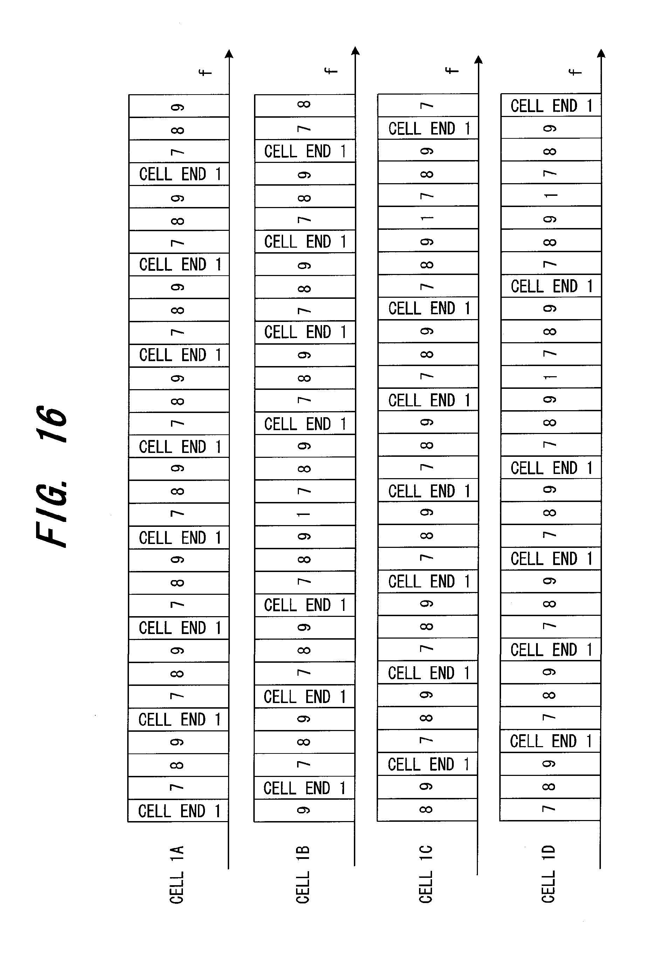

FIG. 16 is an example of assigning frequencies to pilots of a third embodiment of the invention, where the horizontal axis is the frequency. In the example of FIG. 16, pilot frequencies are such that they do not overlap at the boundary between adjacent cells (cell ends). The pilots at the cell ends of each of the cells 1A to 1D can be of a different sequence, however, in the figure, a pilot sequence having sequence number 1 is used, and the frequencies that are assigned to that sequence are different for each cell. In addition, pilot sequences having sequence numbers 7, 8 and 9 are used as the pilots in the areas other than the cell ends (center of the cells) in each of the cells 1A to 1D, and the frequencies that are assigned to those pilot sequences are different for each cell.

Users that use $\pi/2$-BPSK as the data modulation method are often located at the cell ends, so CAZAC sequences having a low CM are taken to be the pilot sequences at the cell ends. Therefore, in the example shown in FIG. 16, CAZAC sequence No. 1, having a CM that is smaller than $\pi/2$-BPSK, is used as the pilot sequences of the cell ends.

The example described above is an example in which pilots are multiplexed and transmitted using Distributed FDM, however, in the case of multiplexing and transmitting pilots using Localized FDM as well, it is possible to similarly decide pilot frequencies for users at the cell ends such that the frequencies do not overlap between adjacent cells.

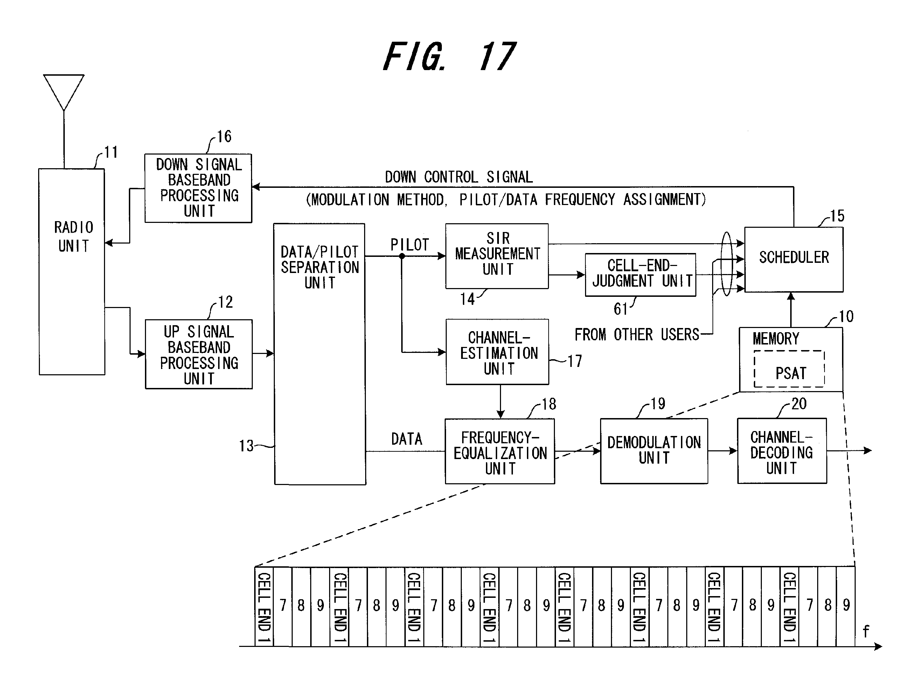

FIG. 17 is a drawing showing the construction of a base station of a third embodiment of the invention, where the same reference numbers are used for parts that are identical with those of the first embodiment shown in FIG. 6. This base station differs in that (1) the correlation (pilot sequence assignment table PSAT) between pilot sequence numbers that can be used at the cell ends, pilot sequence numbers that can be used in the center of cells, and the frequencies assigned to those pilot sequence numbers is stored in a memory 10, and (2) a cell-end-judgment unit 61 is provided, and a scheduer15 assigns pilot sequences to users at the cell ends that can be used as the cell ends, and assigns pilot sequences to user in the center of a cell that can used in the center of the cells. The cell-end judgment unit 61 determines whether a user is located at a cell end based on the size of the reception SIR that is measured by a SIR measurement unit. For example, when the reception SIR is less than a set value, the cell-end judgment unit 61 determines that the user is located at the cell end.

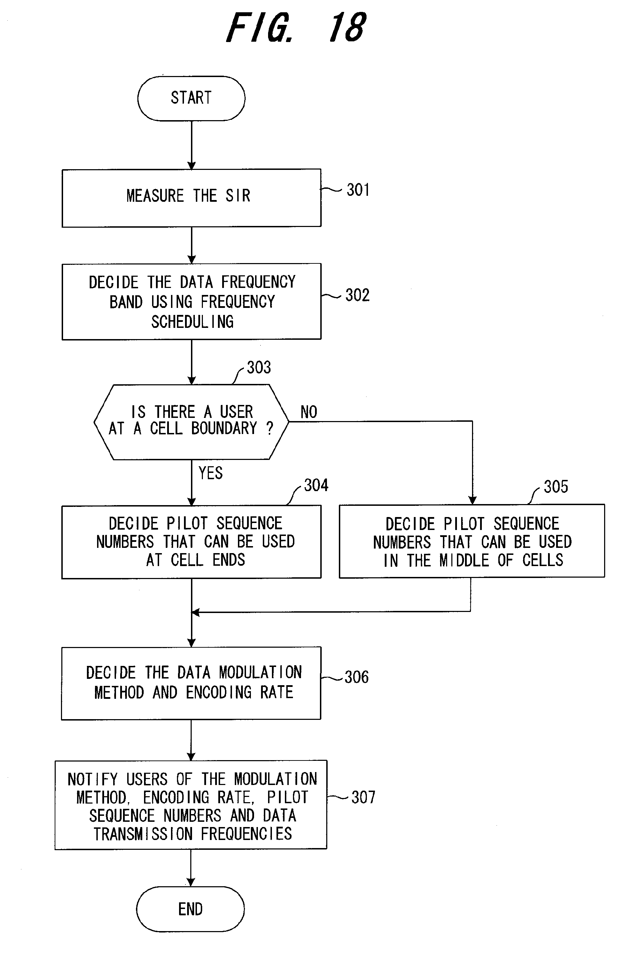

FIG. 18 is a flowchart of the processing by the scheduler. A SIR measurement unit 14 measures the SIR for each frequency based on the pilot signals that are sent from a user using the Distributed FDM method, and together with inputting the results to the scheduler 15, calculates the reception SIR and inputs the reception SIR to the cell-end-judgment unit 61 (step 301). The scheduler 15 makes reference to the SIR for each frequency to find a frequency band favorable for communication, then decides the data transmission frequencies from that frequency band (frequency scheduling, step 302).

The cell-end-judgment unit 61 determines whether or not a user is located at a cell end based on the reception SIR (step 303). When a user is located at a cell end, the scheduler 15 makes reference to the table PSAT and sets a pilot sequence number that can be used at a cell end (step 304), and when a user is not located at a cell end, the scheduler 15 decides a pilot sequence number that can be used in the center of a cell (step 305). After that, the scheduler 15 decides the data modulation method and encoding rate (step 306), and finally notifies the user of the data frequency, pilot sequence number, data modulation method, and encoding rate (step 307). A user terminal of this third embodiment can have the same construction as in the second embodiment shown in FIG. 15.

With this third embodiment, it is possible to reduce interference between pilot symbols at the cell ends. In addition, by making the frequency bands that are used different between adjacent cells, it is possible to increase the cell repetition number even though pilot sequences having a small CM are used as the pilots at the cell ends.

(D) Fourth Embodiment

The correlation (autocorrelation) between an orignial CAZAC sequence and an arbitrarily time shifted CAZAC sequence is '0', and it is possible to handle the CAZAC sequence that has been shifted sufficiently in time as different sequence from the original CAZAC sequence. Therefore, the same CAZAC sequence can be used as pilot sequences in two adjacent cells, and even though the same frequency is assigned to those pilot sequences, by shifting the CAZAC sequences in time in one cell, it is possible to avoid pilot symbol interference between cells.

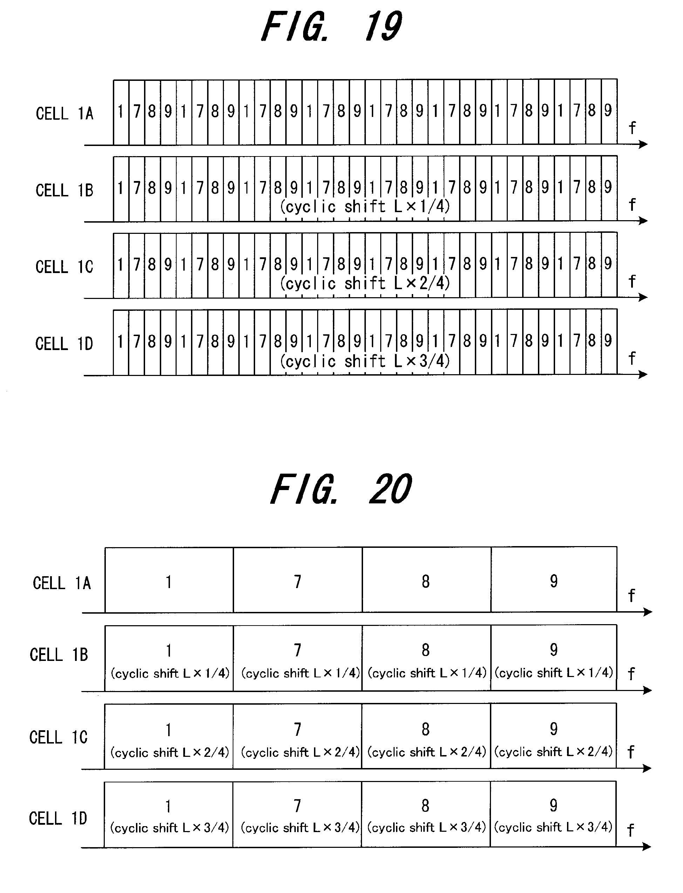

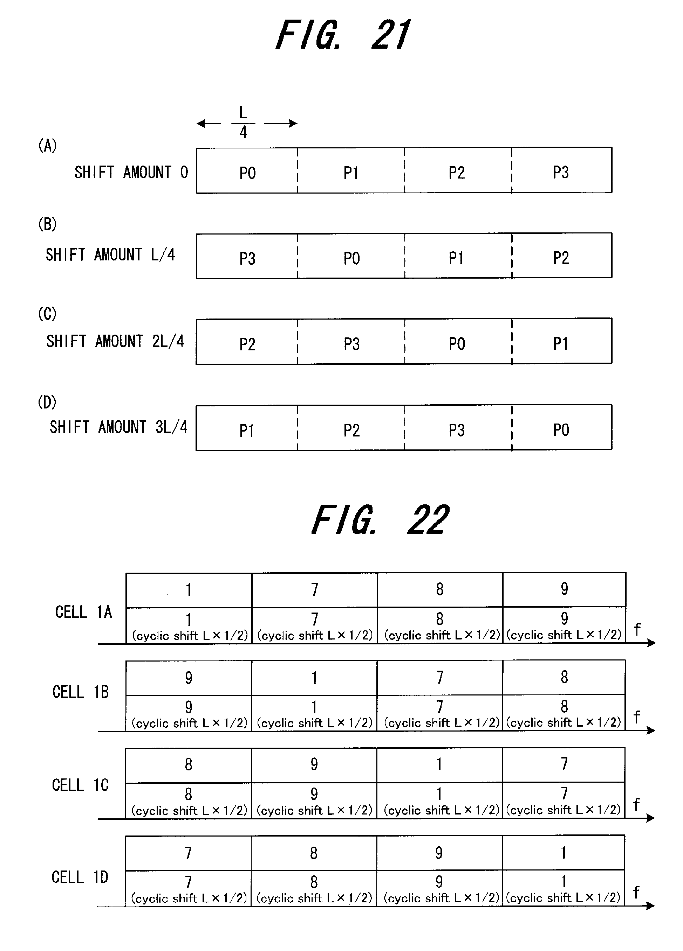

FIG. 19 and FIG. 20 are explanatory drawings of a method for assigning frequencies to pilot sequences of a fourth embodiment of the invention, where the cells 1A to 1D can use pilot sequences 1, 7, 8 and 9. Moreover, the amount that each of the pilot sequences of cell 1A has been shifted is 0, the amount that each of the pilot sequences of cell 1B have been shifted is L/4 (L is the symbol length of a pilot sequence), the amount that each of the pilot sequences of cell 1C has been shifted is 2L/4, and the amount that each of the pilot sequences of cell 1D has been shifted is 3L/4. FIG. 21 shows an example of shifting pilot sequences, where (A) is a pilot sequence when the shift amount = 0, (B) is a pilot sequence when the shift amount = L/4, (C) is a pilot sequence when the shift amount = 2L/4, and (D) is a pilot sequence when the shift amount = 3L/4. However, unless the shift amount is a large value with respect to the maximum delay path, it becomes impossible to distinguish between a user's own delay path and the path of another user, which causes the channel-estimation value to greatly deteriorate. Therefore, the amount of shift of the pilot sequences must be greater than the maximum delay path.

FIG. 19 is an example of multiplexing and transmitting pilot sequences using Distributed FDM, where the same pilot sequence is used in adjacent cells, and the same frequencies are assigned to those pilot sequences, however, the pilot sequences of each cell are sequentially shifted by L/4 each.

FIG. 20 is an example of multiplexing and transmitting pilot sequences using Localized FDM, where the same pilot sequence is used in adjacent cells, and the same frequencies are assigned to those pilot sequences, however, the pilot sequences of each cell are sequentially shifted by L/4 each.

With this fourth embodiment described above, it is possible to eliminate interference among pilots having the same sequence number without making the correlation between the pilot sequences and frequency bands differ among cells. As a result, with this fourth embodiment it is possible to substantially increase the number of pilot sequences having a small CM, and increase the cell repetition number.

FIG. 22 is an explanatory drawing of a method of assigning frequencies for the case in which non-shifted pilot sequences and shifted pilot sequences are used within a cell, and shows an example of multiplexing and transmitting pilot sequences using Localized FDM, however, this example could also be applied to the case of multiplexing and transmitting pilot sequences using Distributed FDM.

A base station of this fourth embodiment can be constructed in the same way as a base station of the first embodiment. However, in the case shown in FIG. 22, the scheduler 15 must take into consideration whether or not to shift in time the pilot sequences. For example, when it is desired that a pilot sequence that is assigned to one user is assigned to another user, the scheduler 15 assigns the same pilot sequence that has been shifted. In addition, the scheduler 15 notifies the user of whether or not pilot sequences have been shifted.

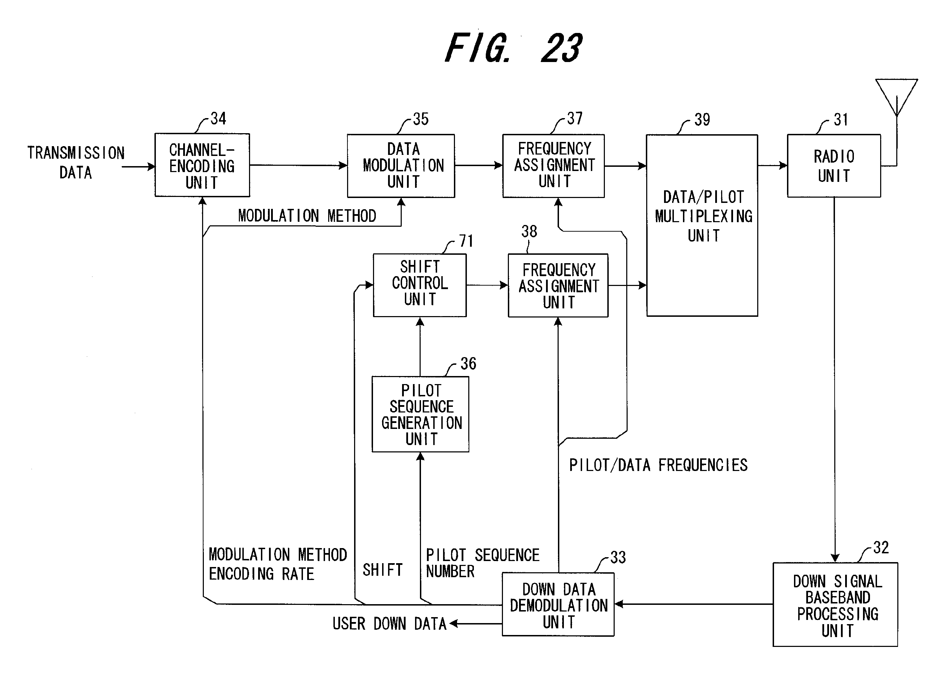

FIG. 23 is a drawing showing the construction of a user terminal, where the same reference numbers are used for parts that are the same as the parts of a user terminal of the first embodiment shown in FIG. 10. This user terminal differs in that a shift-control unit 71 is provided on the output side of the pilot sequence generation unit 36. The shift-control unit 71 controls the shifting of pilots that are generated by the pilot sequence generation unit 36 according to whether or not there is to be shifting.

With the fourth embodiment of the invention shown in FIG. 22, it becomes possible to increase the number of multiplexings of the same pilot sequence by shifting the pilot sequence in time in the same cell.

In the embodiments described above, the case in which CM is used was explained, however, instead of CM, it is possible to use the PAPR, or generally, any parameter that indicates the Peak to Average Power characteristic can be used.

• Effect

With this invention it is possible to eliminate interference among pilots having the same sequence number by making the used frequency band different even though pilots having the same sequence number are used in adjacent cells. As a result, with the present invention, it is possible to substantially increase the number of pilot sequences having a small CM and to increase the cell repetition number. More specifically, it is possible to increase the cell repetition number of pilot sequences having a CM that is less than π/2-BPSK.

Moreover, with the present invention, it is possible to improve the accuracy of channel estimation, and to decide a data transmission frequency by using frequency scheduling.

Furthermore, with the present invention, it is possible to reduce pilot symbol interference at the cell ends, and to increase the number of multiplexings of the same pilot sequence within the same cell.

**Claims**

1. A frequency assignment method for assigning frequencies to UP link pilot signals in a radio communication system; comprising steps of:

   assigning a plurality of pilot sequences having different Peak to Average Power characteristics to each cell or each sector such that they can be used in said each cell or sector;
   assigning a plurality of frequencies to each of said pilot sequences that are used for transmitting said pilot sequences by frequency multiplexing; and
   making the correlation between each of said pilot sequences and said assignedfrequencies in adjacent cells or sectors different.

2. The frequency assignment method of claim 1 comprising a step of assigning said plurality of frequencies that are used for transmitting said pilot sequence by the frequency multiplexing, at a specified frequency interval.

3. The frequency assignment method of claim 1 comprising a step of continuously assigning said plurality of frequencies that are used for transmitting said pilot sequence by the frequency multiplexing.

4. The frequency assignment method of claim 1 wherein a plurality of pilot sequences are transmitted in one frame, comprises steps of:

   assigning a plurality of frequencies that are used for transmitting one of said pilot sequence by frequency multiplexing at a specified frequency interval; and
   continuously assigning a plurality of frequencies that are used for transmitting one of said pilot sequence by frequency multiplexing.

5. The frequency assignment method of any one of the claims 1 to 4, comprising a step of assigning a pilot sequence having small Peak to Average Power characteristic to a user terminal that performs data modulation using a modulation method for which the Peak to Average Power characteristic is small.

6. A frequency assignment method for assigning frequencies to UP link pilot signals in a radio communication system, comprising steps of:

   separating pilot sequences of each cell or each sector into pilot sequences that can be used for channel estimation and pilot sequences that can be used for channel quality measurement;
   assigning a plurality of frequencies that are used for transmitting a pilot sequence for channel estimation by frequency multiplexing from a narrow frequency band at first frequency interval, and assigning a plurality of frequencies that are used for transmitting a pilot sequence for channel quality measurement by frequency multiplexing from a wide frequency band at second frequency interval; and
making the correlation between each of said pilot sequences and said assigned frequencies in adjacent cells or sectors different.

7. The frequency assignment method of claim 6 comprising steps of assigning pilot sequences having small Peak to Average Power characteristics for channel estimation, and assigning pilot sequences having large Peak to Average Power characteristics for channel quality measurement.

8. The frequency assignment method for assigning frequencies to pilot signals of claim 6 or claim 7 wherein the transmission power of pilots for said channel quality measurement is less than that of pilots for channel estimation.

9. A frequency assignment method for assigning frequencies to UP link pilot signals in a radio communication system, comprising steps of:

separating pilot sequences of cells or sectors into pilot sequences that can be used at a cell boundary, and pilot sequences that can be used in the center of a cell;
assigning a plurality of frequencies to each of the pilot sequences that are used for transmitting the pilot sequences by frequency multiplexing; and
making the correlation between each of said pilot sequences and said assigned frequencies in adjacent cells or sectors different.

10. The frequency assignment method of claim 9 comprising steps of assigning pilot sequences having small Peak to Average Power characteristics for cell boundaries, and assigning pilot sequences having large Peak to Average Power characteristics for the center of cells.

11. The frequency assignment method of claim 6 or claim 9 wherein a pilot sequence and that pilot sequence that has been shifted are used in the same cell or same sector.

12. A frequency assignment method for assigning frequencies to UP link pilot signals in a radio communication system, comprising steps of:

assigning a plurality of pilot sequences having different Peak to Average Power characteristics to each cell or each sector such that they can be used in said each cell or each sector;
assigning a plurality of frequencies to each of the pilot sequences that are used for transmitting said pilot sequences by frequency multiplexing; and
shifting said pilot sequence assigned to one cell or sector and using the shifted pilot sequence in adjacent cells or sectors.

13. The frequency assignment method of claim 12 comprising a step of assigning said plurality of frequencies that are used for transmitting said pilot sequence by frequency multiplexing at specified frequency intervals.

14. The frequency assignment method of claim 12 comprising a step of continuously assigning said plurality of frequencies that are used for transmitting said pilot sequence by frequency multiplexing.

15. A base station that assigns frequencies to UP link pilot signals in a radio communication system, comprising:

a memory unit that stores the correlation between each of a plurality of pilot sequences having different Peak to Average Power characteristics and a plurality of frequencies that are assigned for transmitting the pilot sequence by frequency multiplexing;
a measurement unit that measures the reception quality of signals received from a user terminal; and
an instruction unit that makes reference to said correlation and decides a pilot sequence having Peak to Average Power characteristic that corresponds to said reception quality as pilots, then sends an instruction to a user terminal so that the user terminal transmits the pilot sequence using the frequencies assigned to the pilot sequence; wherein the base station
makes the correlation between each of said pilot sequences and said assigned frequencies in adjacent cells or sectors different.

16. The base station of claim 15 wherein said instruction unit decides data modulation method of a user terminal based on said reception quality, and assigns a pilot sequence having small Peak to Average Power characteristic to the user terminal that performs data modulation using a modulation method for a small Peak to Average Power characteristic.

17. A base station that assigns frequencies to UP link pilot signals in a radio communication system, comprising:

a memory unit that stores the correlation between both pilot sequences for channel estimation and pilot sequences for channel quality measurement, and a plurality of frequencies that are used for transmitting each of the pilot sequences using frequency multiplexing;

an instruction unit that makes reference to said correlation and decides a pilot sequence for channel quality measurement used when measuring the channel qual ity, and a pilot sequence for channel estimation used when performing channel estimation, then sends an instruction to a user terminal so that the user terminal transmits each of the pilot sequences using the frequencies assigned to the pilot sequence;

a measurement unit that measures channel quality using the pilot sequence for channel quality measurement;

a data transmission frequency decision unit that finds a frequency band having good channel quality, and decides the data transmission frequency for the user terminal;

a channel estimation unit that performs channel estimation using the pilot sequence for channel estimation; and

a frequency equalization unit that performs frequency equalization control based on the channel estimation results; wherein the base station

assigns a plurality of frequencies, which are used for transmitting said pilot sequences for channel estimation by frequency multiplexing, from a narrow frequency band at first frequency interval;

assigns a plurality of frequencies, which are used for transmitting said pilot sequences for channel quality calculation by frequency multiplexing, from a wide frequency band at second frequency interval; and

makes the correlation between each of said pilot sequences and said assigned frequencies in adjacent cells or sectors different.

18. The base station of claim 17 wherein the base station assigns pilot sequences having small Average to Peak Power characteristics for channel estimation, and assigns pilot sequences having large Average to Peak Power characteristics for channel quality measurement.

19. The base station of claim 17 or claim 18 wherein the transmission power of pilots for channel qual i ty measurement is less than that of pilots for channel estimation.

20. A base station that assigns frequencies to UP link pilot signals in a radio communication system, comprising:

a memory unit that stores the correlation between pilot sequences for cell boundaries and pilot sequences for the center of cells, and a plurality of frequencies that are assigned and used when transmitting each of the pilot sequences using frequency multiplexing;

a judgment unit that determines whether or not a user terminal is located at a cell boundary; and

an instruction unit that makes reference to said correlation and decides a pilot sequence for a cell boundary when the user terminal is located at a cell boundary, and a pilot sequence for the center of a cell when the user terminal is not located at a cell boundary, then sends an instruction to the user terminal so that the user terminal transmits the pilot sequence using the frequencies assigned to the pilot sequence;

wherein the base station

makes the correlation between each of said pilot sequences and said assigned frequencies in adjacent cells or sectors different.

21. The base station of claim 20, wherein the base station assigns pilot sequences having small Average to Peak Power characteristics for cell boundaries, and assigns pilot sequences having large Average to Peak Power characteristics for the center of cells.

22. A base station that assigns frequencies to UP link pilot signals in a radio communication system, comprising:

a memory unit that stores the correlation between a plurality of pilots having different Peak to Average Power characteristics, and a plurality of frequencies that are used for transmitting each of the pilot sequences using frequency multiplexing;

a measurement unit that measures the reception quality of signals received from a user terminal; and

an instruction unit that makes reference to said correlation and decides a pilot sequence having Peak to Average Power characteristic that correspond to said reception quality, as well as decides whether or not to shift said pilot sequence, then sends an instruction to the user terminal so that the user terminal uses the frequencies assigned to the pilot sequence to either shift and transmit the pilot sequence or to transmit the pilot sequence without shifting the pilot sequence.

## FIG. 1

(A)

CELL 1A | 1 7 8 9 1 7 8 9 1 7 8 9 1 7 8 9 1 7 8 9 1 7 8 9 1 7 8 9 1 7 8 9 f

CELL 1B | 9 1 7 8 9 1 7 8 9 1 7 8 9 1 7 8 9 1 7 8 9 1 7 8 9 1 7 8 9 1 7 8 f

CELL 1C | 8 9 1 7 8 9 1 7 8 9 1 7 8 9 1 7 8 9 1 7 8 9 1 7 8 9 1 7 8 9 1 7 f

CELL 1D | 7 8 9 1 7 8 9 1 7 8 9 1 7 8 9 1 7 8 9 1 7 8 9 1 7 8 9 1 7 8 9 1 f

1: ARBITRARY MODULATION METHOD IS ASSIGNED
7, 8, 9: π/2-BPSK IS NOT ASSIGNED

(B)

CELL 1A | 1 7 7 7 1 7 7 7 1 7 7 7 1 7 7 7 1 7 7 7 1 7 7 7 1 7 7 7 1 7 7 7 f

CELL 1B | 8 1 8 8 8 1 8 8 8 1 8 8 8 1 8 8 8 1 8 8 8 1 8 8 8 1 8 8 8 1 8 8 f

CELL 1C | 9 9 1 9 9 9 1 7 9 9 1 9 9 9 1 9 9 9 1 9 9 9 1 9 9 9 1 9 9 9 1 9 f

CELL 1D | 10 10 10 1 10 10 10 1 10 10 10 1 10 10 10 1 10 10 10 1 10 10 10 1 10 10 10 1 10 10 10 1 f

1: ARBITRARY MODULATION METHOD IS ASSIGNED
7, 8, 9, 10: π/2-BPSK IS NOT ASSIGNED

# FIG. 2

| CELL 1A | 1 | 7 | 8 | 9 | f |

| CELL 1B | 9 | 1 | 7 | 8 | f |

| CELL 1C | 8 | 9 | 1 | 7 | f |

| CELL 1D | 7 | 8 | 9 | 1 | f |

# FIG. 3

| | 1 7 8 9 | 1 7 8 9 | 1 7 8 9 | 1 7 8 9 | 1 7 8 9 | 1 7 8 9 | 1 7 8 9 | 1 7 8 9 | f / t |
|---|---|---|---|---|
| frame | Data (QPSK) | Data (QPSK) | Data (QPSK) | Data (π/2-BPSK) |
| | 7 | 8 | 9 | 1 |

# FIG. 4

| GROUP | SEQUENCE NUMBERS OF SEQUENCES HAVING A SMALL CM (USED SIMULTANEOUS WITH $\pi/2$-BPSK) | SEQUENCE NUMBERS OF SEQUENCES HAVING A LARGE CM (USED SIMULTANEOUS AN ARBITRARY MODULATION METHOD) |
|---|---|---|
| 1 | 1 | 7, 8, 9 |
| 2 | 2 | 10, 11, 12 |
| 3 | 3 | 13, 14, 15 |
| 4 | 4 | 16, 17, 18 |
| 5 | 5 | 7, 8, 9 |
| 6 | 6 | 10, 11, 12 |

# FIG. 5

## FIG. 6

MEMORY 10

PILOT SEQUENCE ASSIGNMENT TABLE PSAT PSAT

DOWN CONTROL SIGNAL
(ASSIGNS THE MODULATION METHOD, AND PILOT/DATA FREQUENCIES)

SCHEDULER 15

SIR INFORMATION FOR A PLURALITY OF USERS

SIR MEASUREMENT UNIT 14

CHANNEL-ESTIMATION UNIT 17

FREQUENCY-EQUALIZATION UNIT 18

DEMODULATION UNIT 19

CHANNEL DECODING UNIT 20

DATA/PILOT SEPARATION UNIT

PILOT

DATA 13

DOWN SIGNAL PROCESSING UNIT 16

UP SIGNAL BASEBAND PROCESSING UNIT 12

RADIO UNIT 11

# FIG. 7

START

DECIDES THE MODULATION METHOD AND
ENCODING RATE BASED ON THE SIR — 101

DECIDES PILOT SEQUENCES HAVING
A CM SMALLER THATN THE DECIDED
MODULATION METHOD — 102

DECIDES THE FREQUENCIES THAT ARE
ASSIGNED TO THE PILOT SEQUENCES
AS THE TRANSMISSION FREQUENCIES
FOR PILOTS AND DATA — 103

TRANSMITS THE MODULATION METHOD,
ENCODING RATE, PILOT SEQUENCES,
AND PILOT/DATA FREQUENCIES
TO A MOBILE TERMINAL — 104

END

# FIG. 8

# FIG. 9

START

DECIDES A FREQUENCY BAND FOR DATA BY FREQUENCY SCHEDULING — 201

DECIDES THE MODULATION METHOD AND ENCODING RATE BASED ON THE SIR — 202

DECIDES PILOT SEQUENCES HAVING A CM THAT IS SMALLER THAN THE DECIDED MODULATION METHOD — 203

DECIDES THE FREQUENCIES THAT ARE ASSIGNED TO THE PILOT SEQUENCES AS THE TRANSMISSION FREQUENCIES FOR PILOTS — 204

TRANSMITS THE MODULATION METHOD, ENCODING RATE, PILOT SEQUENCES, AND PILOT/DATA FREQUENCIES TO A MOBILE TERMINAL — 205

END

# FIG. 10

TRANSMISSION DATA →

CHANNEL ENCODING UNIT ~34

DATA MODULATION UNIT ~35

FREQUENCY ASSIGNMENT UNIT ~37

DATA/PILOT MULTIPLEXING UNIT ~39

RADIO UNIT ~31

MODULATION METHOD

PILOT SEQUENCE GENERATION UNIT ~36

FREQUENCY ASSIGNMENT UNIT ~38

PILOT/DATA FREQUENCIES

MODULATION METHOD ENCODING RATE

PILOT SEQUENCE NUMBER

DOWN DATA DEMODULATION UNIT ~33

DOWN SIGNAL BASEBAND PROCESSING UNIT ~32

USER DOWN DATA ←

EP 2 028 776 A1

# FIG. 11

(A)

ASSIGNED FREQUENCIES FOR DATA

(B)

ASSIGNED FREQUENCIES FOR PILOTS

# FIG. 12

TRANSMISSION DATA → CHANNEL ENCODING UNIT (34) → DATA MODULATION UNIT (35) → FREQUENCY ASSIGNMENT UNIT (37) → DATA/PILOT MULTIPLEXING UNIT (39) → RADIO UNIT (31)

PILOT SEQUENCE GENERATION UNIT (36) → FREQUENCY ASSIGNMENT UNIT (38)

FREQUENCY DECISION UNIT (41)

PILOT SEQUENCE ASSIGNMENT TABLE STORAGE UNIT (40)

MODULATION METHOD ENCODING RATE

PILOT SEQUENCE NUMBERS

PILOT SEQUENCE ASSIGNMENT TABLE

USER DOWN LINK ← DOWN DATA DEMODULATION UNIT (33) ← DOWN SIGNAL BASEBAND PROCESSING UNIT (32)

1 7 8 9 1 7 8 9 1 7 8 9 1 7 8 9 1 7 8 9 1 7 8 9 1 7 8 9 1 7 8 9 f

EP 2 028 776 A1

# FIG. 13

# FIG. 14

DOWN SIGNAL BASEBAND PROCESSING UNIT ~16

RADIO UNIT ~11

DOWN CONTROL SIGNAL
(MODULATION METHOD, PILOT/DATA FREQUENCY ASSIGNMENT)

UP SIGNAL BASEBAND PROCESSING UNIT ~12

DATA/PILOT SEPARATION UNIT ~13

PILOT SEPARATION UNIT ~51

PILOTS FOR QUALITY MEASUREMENT

SIR MEASUREMENT UNIT ~14

SCHEDULER ~15

SIR INFORMATION FOR A PLURALITY OF USERS

PILOTS FOR CHANNEL ESTIMATION

CHANNEL ESTIMATION UNIT ~17

MEMORY ~10

PSAT

FREQUENCY EQUALIZATION UNIT ~18

DEMODULATION UNIT ~19

CHANNEL DECODING UNIT ~20

→ f

EP 2 028 776 A1

*FIG. 15*

FIG. 16

# FIG. 17

EP 2 028 776 A1

# FIG. 18

START

MEASURE THE SIR ⌐ 301

DECIDE THE DATA FREQUENCY
BAND USING FREQUENCY
SCHEDULING ⌐ 302

303
IS THERE A USER
AT A CELL BOUNDARY ? — NO

YES

304
DECIDE PILOT SEQUENCE
NUMBERS THAT CAN BE USED
AT CELL ENDS

305
DECIDE PILOT SEQUENCE
NUMBERS THAT CAN BE USED
IN THE MIDDLE OF CELLS

DECIDE THE DATA MODULATION
METHOD AND ENCODING RATE ⌐ 306

NOTIFY USERS OF THE MODULATION
METHOD, ENCODING RATE, PILOT
SEQUENCE NUMBERS AND DATA
TRANSMISSION FREQUENCIES ⌐ 307

END

## FIG. 19

CELL 1A | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | f

CELL 1B | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | f
(cyclic shift L×1/4)

CELL 1C | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | f
(cyclic shift L×2/4)

CELL 1D | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | 1 | 7 | 8 | 9 | f
(cyclic shift L×3/4)

## FIG. 20

| CELL 1A | 1 | 7 | 8 | 9 | f |
|---|---|---|---|---|---|

| CELL 1B | 1<br>(cyclic shift L × 1/4) | 7<br>(cyclic shift L × 1/4) | 8<br>(cyclic shift L × 1/4) | 9<br>(cyclic shift L × 1/4) | f |
|---|---|---|---|---|---|

| CELL 1C | 1<br>(cyclic shift L × 2/4) | 7<br>(cyclic shift L × 2/4) | 8<br>(cyclic shift L × 2/4) | 9<br>(cyclic shift L × 2/4) | f |
|---|---|---|---|---|---|

| CELL 1D | 1<br>(cyclic shift L × 3/4) | 7<br>(cyclic shift L × 3/4) | 8<br>(cyclic shift L × 3/4) | 9<br>(cyclic shift L × 3/4) | f |
|---|---|---|---|---|---|

# FIG. 21

← L/4 →

(A) SHIFT AMOUNT 0

| P0 | P1 | P2 | P3 |
|----|----|----|----|

(B) SHIFT AMOUNT L/4

| P3 | P0 | P1 | P2 |
|----|----|----|----|

(C) SHIFT AMOUNT 2L/4

| P2 | P3 | P0 | P1 |
|----|----|----|----|

(D) SHIFT AMOUNT 3L/4

| P1 | P2 | P3 | P0 |
|----|----|----|----|

# FIG. 22

CELL 1A

| 1 | 7 | 8 | 9 |
|---|---|---|---|
| 1 (cyclic shift L×1/2) | 7 (cyclic shift L×1/2) | 8 (cyclic shift L×1/2) | 9 (cyclic shift L×1/2) |

f →

CELL 1B

| 9 | 1 | 7 | 8 |
|---|---|---|---|
| 9 (cyclic shift L×1/2) | 1 (cyclic shift L×1/2) | 7 (cyclic shift L×1/2) | 8 (cyclic shift L×1/2) |

f →

CELL 1C

| 8 | 9 | 1 | 7 |
|---|---|---|---|
| 8 (cyclic shift L×1/2) | 9 (cyclic shift L×1/2) | 1 (cyclic shift L×1/2) | 7 (cyclic shift L×1/2) |

f →

CELL 1D

| 7 | 8 | 9 | 1 |
|---|---|---|---|
| 7 (cyclic shift L×1/2) | 8 (cyclic shift L×1/2) | 9 (cyclic shift L×1/2) | 1 (cyclic shift L×1/2) |

f →

# FIG. 23

TRANSMISSION DATA → | CHANNEL-ENCODING UNIT (34) | → | DATA MODULATION UNIT (35) | → | FREQUENCY ASSIGNMENT UNIT (37) | → | DATA/PILOT MULTIPLEXING UNIT (39) | → | RADIO UNIT (31) |

MODULATION METHOD

SHIFT CONTROL UNIT (71)

FREQUENCY ASSIGNMENT UNIT (38)

PILOT SEQUENCE GENERATION UNIT (36)

PILOT/DATA FREQUENCIES

MODULATION METHOD ENCODING RATE

SHIFT

PILOT SEQUENCE NUMBER

DOWN DATA DEMODULATION UNIT (33)

DOWN SIGNAL BASEBAND PROCESSING UNIT (32)

USER DOWN DATA ←

EP 2 028 776 A1

# FIG. 24

# FIG. 25

# FIG. 26

# FIG. 27

(A)

(B)

# FIG. 28

(A)

(B)

# FIG. 29

# FIG. 30

$$a_n(n=0, 1, \ldots, N-1) \xrightarrow{\text{FFT}} A_k(k=0, 1, \ldots, N-1) \xrightarrow{\text{SC Mapping}}$$

$$A'_l(l=0, 1, \ldots, MN-1) \xrightarrow{\text{IFFT}} a'_m(m=0, 1, \ldots, MN-1)$$

# FIG. 31

(A)

PILOT | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4

DATA | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4

(B)

PILOT | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4

| DATA | 1 | 2 | 3 | 4 |
|------|---|---|---|---|

(C)

| PILOT | 1 | 2 | 3 | 4 |
|-------|---|---|---|---|

| DATA | 1 | 2 | 3 | 4 |
|------|---|---|---|---|

## FIG. 32

## FIG. 33

# FIG. 34

| CLASS | ORDER | PILOT SEQUENCE NUMBER k |
|-------|-------|-------------------------|
| BPSK | 1 | $k_1$ |
| | 2 | $k_2$ |
| | 3 | $k_3$ |
| QPSK | 4 | $k_4$ |
| | 5 | $k_5$ |
| | 6 | $k_6$ |
| | 7 | $k_7$ |
| | 8 | $k_8$ |
| | 9 | $k_9$ |
| | 10 | $k_{10}$ |

# FIG. 35

# FIG. 36

PILOT SIGNAL (DISTRIBUTED FDM)

| 7 | 7 | 1 | 7 | 7 | 7 | 1 | 7 | 7 | 7 | 1 | 7 | 7 | 7 | 1 | 7 | 7 | 7 | 1 | 7 | 7 | 7 | 1 | 7 | 7 | 7 | 1 | 7 | 7 | 7 | 1 | 7 | |
| U1 | U2 | U3 | U4 | U1 | U2 | U3 | U4 | U1 | U2 | U3 | U4 | U1 | U2 | U3 | U4 | U1 | U2 | U3 | U4 | U1 | U2 | U3 | U4 | U1 | U2 | U3 | U4 | U1 | U2 | U3 | U4 | f |

DATA SIGAL (LOCALIZED FDM)

| QPSK U1 | QPSK U2 | $\pi/2$-BPSK U3 | QPSK U4 | f |

<div align="center">**INTERNATIONAL SEARCH REPORT**</div>

| | International application No. |
|---|---|
| | PCT/JP2006/311386 |

**A. CLASSIFICATION OF SUBJECT MATTER**
*H04J1/00*(2006.01), *H04B1/707*(2006.01)

According to International Patent Classification (IPC) or to both national classification and IPC

**B. FIELDS SEARCHED**

Minimum documentation searched (classification system followed by classification symbols)
H04B1/707, H04J1/00

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | NEC Group, Consideration on uplink pilot design using CAZAC, 3GPP TSG RAN WG1 Meeting #44bis R1-060831, 2006.03, Internet <URL:http://www. 3gpp.org/ftp/tsg_ran/WG1_RL1/TSGR1_44bis/Docs/ R1-060831.zip> | 1-4,6,12-14, 17<br>5,7-11,15, 16,18-22 |
| Y<br>A | JP 2002-111627 A  (Sony International), 12 April, 2002 (12.04.02), Fig. 3; Par. No. [0008]<br>& CN 1336749 A          & US 2002/0034158 A1<br>& KR 2011350 A          & US 6917580 B2<br>& CN 1182688 C          & EP 1178641 A1 | 1-4,6,12-14, 17<br>5,7-11,15, 16,18-22 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 June, 2006 (23.06.06) | 04 July, 2006 (04.07.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/311386

| C (Continuation). DOCUMENTS CONSIDERED TO BE RELEVANT |
| --- |

| Category* | Citation of document, with indication, where appropriate, of the relevant passages | Relevant to claim No. |
| --- | --- | --- |
| Y<br>A | Texas Instruments, Uplink Pilot: Link and System Level Considerations & Text Proposal, 3GPP TSG RAN WG1 #45 R1-061623, 2006.05, Internet <URL: http://www.3gpp.org/ftp/tsg_ran/WG1_RL1/TSGR1_45/Docs/R1-061623.zip> | 2-4,6,13,14,<br>17<br>1,5,7-12,15,<br>16,18-22 |
| A | JP 2001-339758 A (Matsushita Electric Industrial Co., Ltd.), 07 December, 2001 (07.12.01), Fig. 9<br>& AU 5881401 A          & EP 1204282 A1<br>& US 2002/0136187 A1     & CN 1593067 A<br>& WO 2001/091491 A1 | 5,16 |
| A | LG Electronics, Uplink pilot for channel quality measurement, 3GPP TSG RAN WG1#44 R1-060537, 2006.02, Internet <URL: http://www.3gpp.org/ftp/tsg_ran/WG1_RL1/TSGR1_44/Docs/R1-060537.zip> | 6-8,17-19 |
| A | NTT DoCoMo et al., Frequency Domain Channel-Dependent Scheduling with Adaptive Transmission Bandwidth of Pilot Channel for CQI Measurement for E-UTRA Uplink, 3GPP TSG RAN WG1#45 R1-061203, 2006.05, Internet <URL: http://www.3gpp.org/ftp/tsg_ran/WG1_RL1/TSGR1_45/Docs/R1-061203.zip> | 9-11,20,21 |
| Y<br>A | NTT DoCoMo et al., Orthogonal Pilot Channel Structure for E-UTRA Uplink, 3GPP TSG RAN WG1#44-bis R1-060784, 2006.03, internet <URL: http://www.3gpp.org/ftp/tsg_ran/WG1_RL1/TSGR1_44bis/Docs/R1-060784.zip> | 12-14<br>1-11,15-22 |

Form PCT/ISA/210 (continuation of second sheet) (April 2005)

**EP 2 028 776 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006302050 W

**Non-patent literature cited in the description**

- **D.C. CHU.** Polyphase Codes With Good Periodic Correlation Properties. *IEEE Transactions on Information Theory,* July 1972, 531-532
- **K. FAZEL ; S. KEISER.** Multi Carrier and Spread Spectrum Systems. John Willey and Sons, 2003